(19) Europäisches Patentamt
European Patent Office
Office européen des brevets

(11) EP 3 041 884 B1

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **14761603.1**

(22) Anmeldetag: **02.09.2014**

(51) Int Cl.:
***C08G 65/26*** *(2006.01)* ***C08G 64/18*** *(2006.01)*

(86) Internationale Anmeldenummer:
**PCT/EP2014/068583**

(87) Internationale Veröffentlichungsnummer:
**WO 2015/032737 (12.03.2015 Gazette 2015/10)**

(54) **RADIKALISCHE VERNETZUNG VON POLYETHERCARBONATPOLYOLEN ENTHALTEND ELEKTRONENARME UND ELEKTRONENREICHE DOPPELBINDUNGEN**

RADICAL CROSS-LINKING OF POLYETHER CARBONATE POLYOLS CONTAINING LOW ELECTRON AND ELECTRON-RICH DOUBLE BONDS

RÉTICULATION RADICALE DE POLYOLS DE POLYÉTHERCARBONATES COMPRENANT DES LIAISONS DOUBLES PAUVRES EN ÉLECTRONS ET RICHES EN ÉLECTRONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2013 EP 13183208**

(43) Veröffentlichungstag der Anmeldung:
**13.07.2016 Patentblatt 2016/28**

(73) Patentinhaber: **Covestro Deutschland AG**
**51373 Leverkusen (DE)**

(72) Erfinder:
- **MÜLLER, Thomas Ernst**
  **52074 Aachen (DE)**
- **GÜRTLER, Christoph**
  **50735 Köln (DE)**
- **SUBHANI, Muhammad Afzal**
  **52066 Aachen (DE)**
- **KOEHLER, Burkhard**
  **34289 Zierenberg (DE)**
- **LEITNER, Walter**
  **52074 Aachen (DE)**

(74) Vertreter: **Levpat**
**c/o Covestro AG**
**Gebäude 4825**
**51365 Leverkusen (DE)**

(56) Entgegenhaltungen:
**EP-A1- 2 604 641** **EP-A1- 2 604 642**
**WO-A1-2010/028362** **WO-A2-2013/016331**

- **TAO Y. ET AL: "Crosslinkable polypropylene carbonate", JOURNAL OF POLYMER SCIENCE PART A: POLYMER CHEMISTRY, Bd. 44, Nr. 18, 2006, Seiten 5329-5336, XP002723362, in der Anmeldung erwähnt**
- **BYRNE C.M. ET AL: "Alternating copolymerisation of limonene oxide and carbon dioxide", JOURNAL AMERICAN CHEMICAL SOCIETY, Bd. 126, 2004, Seiten 11404-11405, XP002723363,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 041 884 B1

## Beschreibung

Die vorliegende Erfindung betrifft ein Verfahren zur Herstellung von Polyethercarbonatpolyolen, wobei die Polyethercarbonatpolyole elektronenarme und elektronenreiche Doppelbindungen enthalten, umfassend die Schritte (α) Vorlegen einer H-funktionellen Starterverbindung und eines Katalysators und (γ) Zudosieren von Kohlendioxid und zweier ungesättigter Verbindungen, wobei die ungesättigten Verbindungen aus Verfahrensschritt (γ) ausgesucht sind aus der Gruppe umfassend ungesättigte Epoxide und ungesättigte cyclische Anhydride und eine der ungesättigten Verbindungen eine elektronenreiche und eine der ungesättigten Verbindungen eine elektronenarme Doppelbindung aufweist. Des Weiteren betrifft die Erfindung die Vernetzung von Polyethercarbonatpolyolen enthaltend elektronenarme und elektronenreiche Doppelbindungen sowie die daraus erhältlich vernetzten Polyethercarbonate.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130, 210-220, 1969). In einer möglichen Herstellungsvariante werden dabei Polyethercarbonatpolyole durch eine katalytische Umsetzung von Epoxiden und Kohlendioxid in Anwesenheit H-funktioneller Startersubstanzen ("Starter") erhalten. Eine allgemeine Reaktionsgleichung hierfür ist in Schema (I) gegeben:

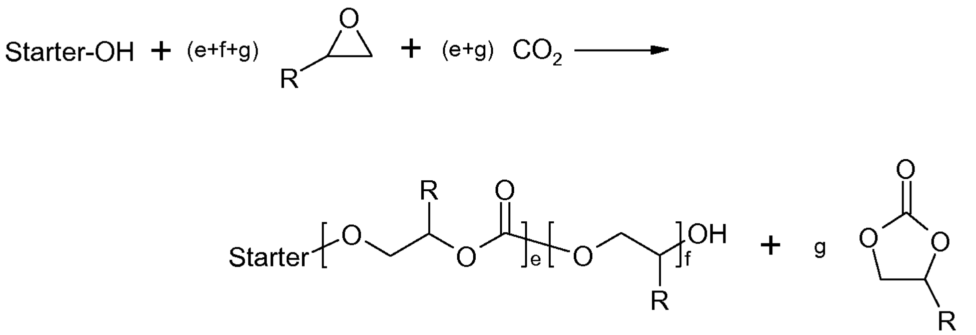

(I)

Als weiteres Produkt, hier ein unerwünschtes Nebenprodukt, entsteht neben dem Polyethercarbonat ein cyclisches Carbonat (beispielsweise für R = $CH_3$ Propylencarbonat).

Polyethercarbonatpolyole weisen, wie oben dargestellt, OH-Funktionalitäten auf, welche prinzipiell im Rahmen weiterer Umsetzungen, zum Beispiel durch die Zugabe von Diiso- oder Polyisocyanaten, eine Herstellung höhermolekularer Vernetzungsprodukte zugänglich macht. Wünschenswert wäre es jedoch, noch weitere Möglichkeiten zur Funktionalisierung des Polymergerüstes zu etablieren, welche unter anderen in anschließenden Vernetzungsreaktionen genutzt werden können. Eine Möglichkeit dazu bietet die Einpolymerisation von Monomeren, welche ungesättigte Gruppen aufweisen, die anschließend als funktionelle Gruppen fungieren können.

EP-A 2604641 offenbart ein Verfahren zur Herstellung von Polyetherestercarbonatpolyolen durch katalytische Anlagerung von Kohlendioxid, Alkylenoxiden und cyclischen Anhydriden an H-funktionelle Startersubstanzen in Gegenwart von Doppelmetallcyanid-Katalysatoren (DMC-Katalysatoren).

EP-A 2604642 offenbart ein Verfahren zur Herstellung von Polyethercarbonatpolyolen durch katalytische Anlagerung von Kohlendioxid und Alkylenoxiden an H-funktionelle Startersubstanzen in Gegenwart von DMC-Katalysator, der in Gegenwart von cyclischem Anhydrid aktiviert wurde.

Die Veröffentlichung J. Polym. Sci. Part A (2006) 44(18) 5329-5336 beschreibt Polycarbonate hergestellt aus Alkylenoxid, Allylglycidylether und $CO_2$ mit ternären Selten-Erd-Katalysatoren (Glycerin und Diethylzink modifiziert mit Y-Salzen). Die Epoxid-$CO_2$-Copolymerisation ergibt nahezu alternierende Polymere.

Die Veröffentlichung Journal American Chemical Society (2004) 126 11404-11405 beschreibt die alternierende Copolymerisation von Limonenoxid und $CO_2$. Als Katalysatoren werden Zink-β-diiminate eingesetzt.

WO-A 2013/016331 offenbart Formulierungen zur Herstellung von Polyurethanen sowie die damit hergestellten Polyurethane (wie Schäume, TPUs und Elastomere), basierend auf aliphatischen Polycarbonatpolyolen mit einer alternierenden Carbonat-Alkylenoxid-Struktur.

WO-A 2010/028362 offenbart die Herstellung überwiegend alternierender Polycarbonatpolyole durch Umsetzung von Epoxiden mit $CO_2$ unter Katalyse mit Metallkomplexen, typischerweise Co(III)salen-Komplexen, und optional Cokatalysatoren in Gegenwart von protischen Kettenüberträgern, vorzugsweise Diolen, wie niedermolekularen Diolen und hydroxyfunktionellen Polyestern und Polyethern.

In Polymer (2006) 47, 8453-8461 und J. Polymer Research (2009) 16, 91-97 wird die Terpolymerisation von Alkylenoxiden mit Maleinsäureanhydrid und $CO_2$ in Gegenwart von polymergeträgerten Doppelmetallkatalysatoren oder geträgerten Zinkglutarat-Katalysatoren offenbart. Unter anderem wird die Erhöhung der Glastemperatur durch den Einbau des Anhydrids sowie die Vernetzung mit Dicumylperoxid bei 170°C über mehrere Minuten beschrieben. Die erhöhte Glastemperatur und die damit einhergehende erhöhte Viskosität erschweren die Verarbeitung der erhaltenen Produkte. Die Aushärtetemperaturen sind für viele Anwendungen zu hoch und die Aushärtezeiten zu lang.

In Journal of Polymer Science Part A: Polymer Chemistry (2006) 44 (18), 5329-5336 werden Terpolymere aus Propylenoxid, Allylglycidylether und $CO_2$ beschreiben, welche sich durch UV-Strahlung vernetzen lassen. Jedoch ist diese Art der Härtung für viele Anwendungen zu langsam.

Es besteht daher die Aufgabe ein Verfahren zur spezifischen Funktionalisierung von Polyethercarbonatpolyolen bereitzustellen und des Weiteren einen Weg aufzuzeigen, wie diese Polyethercarbonatpolyole zu höhermolekularen Aggregaten vernetzt werden können.

Erfindungsgemäß gelöst wird die Aufgabe durch ein Verfahren zur Herstellung von Polyethercarbonatpolyolen, wobei die Polyethercarbonatpolyole Doppelbindungen enthalten, umfassend die Schritte:

($\alpha$) Vorlegen eines Katalysators und:

($\alpha\alpha$) eines Suspensionsmittels, das keine H-funktionellen Gruppen enthält und/oder
($\alpha\beta$) einer H-funktionellen Starterverbindung

($\gamma$) Zudosieren von Kohlendioxid, eines Epoxides, das keine ungesättigte Gruppe enthält, und mindestens zweier ungesättigter Verbindungen,

wobei die in Schritt ($\gamma$) zudosierten ungesättigten Verbindungen aus der Gruppe der ungesättigten Epoxide und/oder ungesättigten cyclischen Anhydride ausgewählt sind, wobei

($\gamma$1) eine der ungesättigten Verbindungen eine Doppelbindung umfassend mindestens einen Substituenten ausgewählt aus der Gruppe $-OX^1$, $-OCOX^1$, $-X^1$, $-CH_2OX^1$ und/oder $-CH=CHX^1$ umfasst und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;

($\gamma$2) und eine andere der ungesättigten Verbindungen eine Doppelbindung umfassend mindestens einen Substituenten ausgewählt aus der Gruppe -F, -Cl, -Br, -I, -COH, $-COX^2$, - $COOX^2$, -C=N und/oder $-NO_2$ umfasst oder ein ungesättigtes, substituiertes oder unsubstituiertes cyclisches Anhydrid einer organischen Dicarbonsäure ist und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht

und wobei weiterhin für den Fall, dass in Schritt ($\alpha$) keine H-funktionelle Starterverbindung vorgelegt wurde, Schritt ($\gamma$) das Zudosieren einer H-funktionellen Starterverbindung umfasst.

Überraschenderweise wurde gefunden, dass durch die Wahl mindestens zweier unterschiedlicher ungesättigter Verbindungen in der Synthese des Polyethercarbonatpolyols, wobei eine der Verbindungen eine elektronenreiche und die andere Verbindung eine elektronenarme Doppelbindung aufweist, Polyethercarbonatpolyole mit ungesättigten Gruppen erhalten werden können, welche im Vergleich zum Stand der Technik besonders günstige Eigenschaften aufweisen.

Die erfindungsgemäßen Polyethercarbonatpolyole mit ungesättigten Gruppen lassen sich reproduzierbar in hoher Ausbeute erhalten und zeigen durch die gewählte Verfahrensführung eine enge Molekularmassenverteilung und nur einen sehr geringen Anteil an nicht reagierten Monomeren. Zudem lassen sich die durch dieses Verfahren erhältlichen Polyethercarbonatpolyole mit ungesättigten Gruppen besonders vorteilhaft radikalisch vernetzen und führen so zu vernetzten Polyethercarbonaten mit vorteilhaften Eigenschaften und leichter Prozessführung.

Ohne durch eine Theorie gebunden zu sein, ergibt sich diese leichtere Prozessführung im Rahmen der Vernetzung durch die unterschiedliche Reaktivität der Doppelbindungen des Polyethercarbonatpolyols innerhalb der radikalischen Umsetzung. Dies steht im Gegensatz zu radikalischen Umsetzungen, an denen Polyethercarbonatpolyole beteiligt sind, welche nur Doppelbindungen einer Elektronendichte aufweisen.

Die ungesättigten Verbindungen können dabei die elektronenziehenden oder -spendenden Substituenten beispielsweise sowohl direkt an, benachbart oder gegebenenfalls in Allylstellung zur Doppelbindung tragen.

In den durch das erfindungsgemäße Verfahren herstellbaren Polyethercarbonatpolyolen können die Doppelbindungen in der Hauptkette und/oder in den Seitenketten vorliegen.

Sofern nicht anders angezeigt bedeutet der Begriff "Doppelbindung" im Kontext der vorliegenden Erfindung eine C=C-Doppelbindung.

Substituenten gemäß (γ1) können zu einer Erhöhung der Elektronendichte der Doppelbindung beitragen. Man erhält also elektronenreiche Doppelbindungen. Elektronenreiche Doppelbindungen im Sinne der Erfindung sind demzufolge solche, die elektronenreicher als Ethylen sind, also solche, welche durch +M oder +I Substituenten substituiert sind. Es gilt dementsprechend das oben gesagte, mit der Maßgabe, dass die Substituenten in der Lage sind, die Elektronendichte durch mesomere oder induktive Effekte in der Doppelbindung zu erhöhen.

Substituenten gemäß (γ2) können zu einer Reduzierung der Elektronendichte der Doppelbindung beitragen. Man erhält also elektronenarme Doppelbindungen. Elektronenarme Doppelbindungen im Sinne der Erfindung sind demzufolge solche, die elektronenärmer als Ethylen sind, also solche, welche durch -M oder -I Substituenten substituiert sind. Substituenten mit einem -M-Effekt sind in der Lage, Elektronendichte durch mesomere Ladungsdelokalisation aus der Doppelbindung auf den Substituenten zu verteilen. Substituenten mit einem -I-Effekt sind in der Lage, die Elektronendichte in der Doppelbindung durch einen induktiven Effekt zu verringern.

Sowohl im Fall der Substituenten gemäß (γ1) als auch gemäß (γ2) schließt der Begriff "substituierte Methylenkette" die Möglichkeit mit ein, dass die Methylenkette eine Epoxidgruppe enthält. Ein Beispiel hierfür ist Allylglycidylether, in dem die Doppelbindung mit $-CH_2OX^1$ substituiert ist und $X^1$ als eine 1,2-oxosubstituierte Methylenkette beschrieben werden kann. Weitere Beispiele sind Butadienmonoepoxid und Isoprenmonoepoxid.

Gleichfalls schließt der Begriff "substituiertes Cycloalkyl" die Möglichkeit mit ein, dass die Cycloalkyleinheit eine Epoxidgruppe enthält, wie es beispielsweise für Vinylcyclohexenoxid der Fall ist. Weiterhin ist es möglich, dass die Doppelbindung durch 1,2-Substitution Teil eines epoxysubstituierten Cycloalkylrings ist, wie er unter anderem bei Cyclooctadienmonoepoxid vorliegt.

Liegen mehrere Substituenten mit unterschiedlichen elektronischen und/oder mesomeren Beiträgen vor, so kann der Gesamtbeitrag der Substituenten, und damit die Klassifizierung in elektronenreiche oder -arme Doppelbindung, anhand quantenmechanischer Rechnungen erfolgen. Wahlweise kann auch die Reaktionsgeschwindigkeit einer elektrophilen Substitution an diese Doppelbindung ermittelt und mit der einer unsubstituierten Doppelbindung verglichen werden. Höhere Reaktionsgeschwindigkeiten zeigen eine elektronenreichere Doppelbindung, niedrigere Reaktionsgeschwindigkeiten eine elektronenärmere Doppelbindung an.

Die erfindungsgemäße Substitution führt, ohne durch eine Theorie gebunden zu sein, zu Veränderung des HOMO/LUMO-Levels der beteiligten Doppelbindungen, welches eine anschließende Umsetzung, zum Beispiel durch eine radikalische Vernetzung, erleichtert.

In dem erfindungsgemäßen Verfahren können als Monomere ohne ungesättigte Gruppen Epoxide mit 2-45 Kohlenstoffatomen eingesetzt werden, die keine Doppelbindung tragen. Bei den Epoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise können als Epoxide Ethylenoxid und/oder Propylenoxid, insbesondere Propylenoxid eingesetzt werden.

Für die Herstellung der erfindungsgemäßen Polyethercarbonatpolyole enthaltend elektronenreiche und elektronenarme Doppelbindungen wird weiterhin eine H-funktionelle Starterverbindung eingesetzt.

Die Suspensionsmittel, die in Schritt (α) zum Suspendieren des Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt (α) zum Suspendieren des

Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Epoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Katalysator für die Herstellung der erfindungsgemäßen Polyethercarbonatpolyole kann beispielsweise ein DMC-Katalysator (Doppel-Metall-Cyanid-Katalysator) eingesetzt. Es können zusätzlich oder alternativ auch andere Katalysatoren für die Copolymerisation von Alkylenoxiden und $CO_2$ aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Es ist bevorzugt, dass das erfindungsgemäße Verfahren den Schritt(β) zwischen Schritt (α) und Schritt (γ)

umfasst:

(β) Zudosieren mindestens eines Epoxides

Es ist weiterhin bevorzugt, dass der Katalysator ein DMC-Katalysator ist.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Der Begriff Terpolymerisation im Sinne der Erfindung beinhaltet die Polymerisation von mindestens einem Epoxid, mindestens zwei Comonomeren und $CO_2$. Terpolymerisation im Sinne der Erfindung schließt insbesondere auch die Copolymerisation von insgesamt mehr als drei Monomeren ein.

Eine bevorzugte Ausführungsform des erfindungsgemäßen Verfahrens zur Herstellung von Polyethercarbonatpolyolen mit ungesättigten Gruppen aus mindestens zwei ungesättigten Verbindungen, einem oder mehreren Epoxiden und Kohlendioxid sowie einer oder mehrerer H-funktioneller Starterverbindungen in Gegenwart eines DMC-Katalysators ist dadurch gekennzeichnet, dass

(α) [erste Aktivierungsstufe] ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der DMC-Katalysator der H-funktionellen Startersubstanz oder dem Gemisch von mindestens zwei H-funktionellen Startersubstanzen vor, während oder nach der 1. Aktivierungsstufe zugesetzt wird,

(β) [zweite Aktivierungsstufe] eine Teilmenge (bezogen auf die Gesamtmenge der in den Schritten (β) und (γ) eingesetzten Menge an Epoxiden) von einem oder mehreren Epoxiden zu der aus Schritt (α) resultierenden Mischung zugesetzt wird, wobei die Zugabe einer Teilmenge an Epoxid gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) [Polymerisationsstufe] ein oder mehrere Epoxiden, mindestens zweier ungesättigter Verbindungen und Kohlendioxid zu der aus Schritt (β) resultierenden Mischung fortwährend zudosiert werden, wobei die für die Terpolymerisation eingesetzten Epoxide gleich oder von den bei Schritt (β) eingesetzten Epoxiden verschieden sein können.

Zu Schritt (α):

Die Zugabe der einzelnen Komponenten in Schritt (α) kann gleichzeitig oder nacheinander in beliebiger Reihenfolge erfolgen; bevorzugt wird in Schritt (α) zunächst der DMC-Katalysator vorgelegt und gleichzeitig oder anschließend die H-funktionelle Starterverbindung zugesetzt.

Gegenstand einer bevorzugten Ausführungsform ist ein Verfahren, wobei in Schritt (α)

(α1) in einem Reaktor der DMC-Katalysator, sowie ein Suspensionsmittel und/oder eine oder mehrere H-funktionelle Starterverbindungen vorgelegt werden,

(α2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe].

Gegenstand einer weiteren bevorzugten Ausführungsform ist ein Verfahren, wobei in Schritt (α)

(α1) ein DMC-Katalysator sowie ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre vorgelegt wird und

($\alpha$2) in das resultierende Gemisch aus DMC-Katalysator und dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe],

wobei der Doppelmetallcyanid-Katalysator zu der H-funktionellen Startersubstanz oder dem Gemisch aus mindestens zwei H-funktionellen Startersubstanzen in Schritt ($\alpha$1) oder unmittelbar anschließend in Schritt ($\alpha$2) zugesetzt werden kann.

Der DMC-Katalysator kann in fester Form oder in einem Suspensionsmittel oder einer H-funktionellen Starterverbindung suspendiert zugegeben werden. Wird der DMC-Katalysator als Suspension zugegeben, wird diese bevorzugt in Schritt ($\alpha$1) dem Suspensionsmittel oder der einen oder mehreren H-funktionellen Starterverbindungen zugefügt.

Zu Schritt ($\beta$):

Der Schritt ($\beta$) der zweiten Aktivierungsstufe kann in Gegenwart von $CO_2$ und/oder Inertgas erfolgen. Bevorzugt erfolgt Schritt ($\beta$) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Epoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Epoxids kann bei einem beliebig zuvor gewählten Vordruck erfolgen. Als Gesamtdruck (absolut) der Atmosphäre wird in Schritt ($\beta$) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Epoxids der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer bevorzugten Ausführungsform beträgt die bei der Aktivierung in Schritt ($\beta$) eingesetzte Menge an einem oder mehreren Epoxiden 0,1 bis 25,0 Gew.-%, bevorzugt 1,0 bis 20,0 Gew.-%, besonders bevorzugt 2,0 bis 16,0 Gew.-%, bezogen auf die im Schritt ($\alpha$) eingesetzte Menge an Suspensionsmittel, das keine H-funktionellen Gruppen enthält, H-funktioneller Starterverbindung, Gemisch aus Suspensionsmittel, das keine H-funktionellen Gruppen enthält und H-funktioneller Starterverbindung oder dem Gemisch aus mindestens zwei H-funktionellen Starterverbindungen. Das Epoxid kann in einem Schritt oder schrittweise in mehreren Teilmengen zugegeben werden.

In einer besonders bevorzugten Ausführungsform der Erfindung wird bei der Aktivierung in Schritt ($\beta$) eine Teilmenge (bezogen auf die Gesamtmenge der in den Schritten ($\beta$) und ($\gamma$) eingesetzten Menge an Epoxiden) von einem oder mehreren Epoxiden zu der aus Schritt ($\alpha$) resultierenden Mischung zugesetzt [zweite Aktivierungsstufe], wobei die Zugabe einer Teilmenge an Epoxid gegebenenfalls in Gegenwart von $CO_2$ und/oder Inertgas erfolgen kann. Der Schritt ($\beta$) kann auch mehrfach erfolgen. Der DMC-Katalysator wird vorzugsweise in einer Menge eingesetzt, so dass der Gehalt an DMC-Katalysator im resultierenden Polyethercarbonatpolyol mit ungesättigten Gruppen 10 bis 10000 ppm, besonders bevorzugt 20 bis 5000 ppm und höchst bevorzugt 50 bis 500 ppm beträgt.

Im zweiten Aktivierungsschritt kann das Epoxid beispielsweise in einer Portion oder innerhalb von 1 bis 15 Minuten, vorzugsweise 5 bis 10 Minuten zugegeben. Die Dauer des zweiten Aktivierungsschritts beträgt bevorzugt 15 bis 240 Minuten, besonders bevorzugt 20 bis 60 Minuten.

Zu Schritt ($\gamma$):

Die Dosierung des oder der Epoxide, mindestens zweier ungesättigter Verbindungen, im Folgenden auch als Monomere bezeichnet, und des Kohlendioxids kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Monomere den $CO_2$-Druc allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung der Monomere kann simultan, wechselweise oder sequentiell zur Kohlendioxid-Dosierung erfolgen. Es ist möglich, die Monomere mit einer konstanten Dosierrate zu dosieren oder die Dosierrate kontinuierlich oder schrittweise zu steigern oder zu senken oder die Monomere portionsweise zuzugeben. Bevorzugt werden die Monomere mit konstanter Dosierrate dem Reaktionsgemisch zugegeben. Werden mehrere Epoxide zur Synthese der Polyethercarbonatpolyole mit ungesättigten Gruppen eingesetzt, so können die Epoxide einzeln oder als Gemisch zudosiert werden. Die Dosierung der Epoxide kann simultan, wechselweise oder sequentiell über jeweils separate Dosierungen (Zugaben) erfolgen oder über eine oder mehrere Dosierungen, wobei die Epoxide einzeln oder als Gemisch dosiert werden können. Über die Art und/oder Reihenfolge der Dosierung der Monomere und/oder des Kohlendioxids ist es möglich, statistische, alternierende, blockartige oder gradientenartige Polyethercarbonatpolyole mit ungesättigten Gruppen zu synthetisieren.

Vorzugsweise wird ein Überschuss an Kohlendioxid bezogen auf die berechnete Menge an benötigtem Kohlendioxid im Polyethercarbonatpolyole mit ungesättigten Gruppen eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole mit ungesättigten Gruppen als vorteilhaft erwiesen. Es ist möglich, das Kohlendioxid dem Reaktionsbehälter kontinuierlich oder diskontinuierlich zuzuführen. Dies hängt davon ab, wie schnell die Monomere und das $CO_2$ verbraucht werden und ob das Produkt gegebenenfalls $CO_2$-freie Polyether-Blöcke oder Blöcke mit unterschiedlichem $CO_2$-Gehal enthalten soll. Die Konzentration des Kohlendioxids kann bei der Zugabe der Monomere ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,
(ii) Verwendung eines Hohlwellenrührers,
(iii) eine Kombination aus den Dosierungen gemäß (i) und (ii), und/oder
(iv) Begasung über die Flüssigkeitsoberfläche durch Einsatz mehrstufiger ausgeführter Rührorgane.

Schritt (γ) wird beispielsweise bei Temperaturen von 60 bis 150°C, vorzugsweise von 80 bis 120°C, ganz besonders bevorzugt von 90 bis 110°C durchgeführt. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchte Monomere) aus dem über der Reaktionsmischung befindlichen Gasraum abgesaugt und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Monomeren, wieder in das Reaktionsgemisches gemäß (i), (ii), (iii) und/oder (iv) eingeleitet.

Bevorzugt wird der Druckabfall, welcher über Einbau des Kohlendioxids, der Monomere bei der Terpolymerisation in das Reaktionsprodukt entsteht, über frisch zudosiertes Kohlendioxid ausgeglichen.

Die Einleitung der Monomere kann separat oder zusammen mit dem $CO_2$ sowohl über die Flüssigkeitsoberfläche oder direkt in die flüssige Phase erfolgen. Bevorzugt erfolgt die Einleitung der Monomere direkt in die flüssige Phase, da dies den Vorteil hat, dass eine rasche Durchmischung der eingebrachten Monomere mit der flüssigen Phase erfolgt und so lokale Konzentrationsspitzen der Monomere vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Polyethercarbonatpolyole mit ungesättigten Gruppen können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst

nach Ende der Reaktion entnommen wird, als auch in der kontinuierlichen Anwendung, bei der das Produkt kontinuierlich entnommen wird, ist besonders auf die Dosiergeschwindigkeit der Monomere zu achten. Sie ist so einzustellen, dass trotz der inhibierenden Wirkung des Kohlendioxids die Monomere genügend schnell abreagieren. Die Konzentration an freien Monomeren in der Reaktionsmischung während der zweiten Aktivierungsstufe (Schritt β) beträgt vorzugsweise > 0 bis 100 Gew.-%, besonders bevorzugt > 0 bis 50 Gew.-%, höchst bevorzugt > 0 bis 20 Gew.-% (jeweils bezogen auf das Gewicht der Reaktionsmischung). Die Konzentration an freien Monomeren in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

Eine weitere mögliche Ausführungsform im Rührkessel für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß den Schritten (α) und (β) aktivierte Katalysator-Starter-Mischung in demselben Reaktor weiter mit den Monomeren und Kohlendioxid umgesetzt. In einer weiteren bevorzugten Ausführungsform wird die gemäß den Schritten (α) und (β) aktivierte Katalysator-Starter-Mischung in einem anderen Reaktionsbehältnis (beispielsweise einem Rührkessel, Rohrreaktor oder Schlaufenreaktor) weiter mit den Monomeren und Kohlendioxid umgesetzt. In einer weiteren bevorzugten Ausführungsform wird die gemäß dem Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit den Monomeren und Kohlendioxid umgesetzt.

Bei Reaktionsführung in einem Rohrreaktor werden die gemäß Schritt (α) vorbereitete Katalysator-Starter-Mischung oder die gemäß der Schritte (α) und (β) aktivierte Katalysator-Starter-Mischung und gegebenenfalls weitere Starter sowie die Monomeren und Kohlendioxid kontinuierlich durch ein Rohr gepumpt. Bei Verwendung einer gemäß Schritt (α) vorbereiteten Katalysator-Starter-Mischung erfolgt die zweite Aktivierungsstufe gemäß Schritt (β) im ersten Teil des Rohrreaktors und die Terpolymerisation gemäß Schritt (γ) im zweiten Teil des Rohrreaktors. Die molaren Verhältnisse der Reaktionspartner variieren je nach gewünschtem Polymer.

In einer Verfahrensvariante wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Monomere kann am Eingang des Reaktors eingebracht werden. Die Restmenge der Monomere wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt werden durch die Mischelemente zudosiertes $CO_2$ und die Monomere mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Polyethercarbonatpolyolen mit ungesättigten Gruppen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet sein, in dem nach der Reaktion vorhandene Restkonzentrationen freier Monomere abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.-% an Monomeren. Die Nachreaktionszeit bzw. die Verweilzeit im nachgeschalteten Reaktor beträgt bevorzugt 10 min bis 24 h, besonders bevorzugt 10 min bis 3 h.

Die erfindungsgemäß erhältlichen Polyethercarbonatpolyole mit ungesättigten Gruppen haben vorzugsweise

eine OH-Funktionalität (d.h. durchschnittliche Anzahl von OH-Gruppen pro Molekül) von mindestens 0,8, bevorzugt von 1 bis 8, besonders bevorzugt von 1 bis 6 und ganz besonders bevorzugt von 2 bis 4.

In einer alternativen Ausführungsform werden die OH-Gruppen vor der Vernetzung der Polyethercarbonatpolyole zu vernetzten Polyethercarbonaten mit geeigneten Reagenzien abgesättigt, so dass das entstehende abgesättigte Polyethercarbonatpolyol eine OH-Funktionalität kleiner als 0,8, bevorzugt kleiner als 0,5 und besonders bevorzugt kleiner als 0,1 aufweist. Dies führt bei speziellen Anwendungen zu einer niedrigeren Polarität der nach Vernetzung erhaltenen vernetzten Polyethercarbonate, wodurch beispielsweise die Wasseraufnahme der Materialien herabgesetzt wird. Geeignete Reagenzien für die Absättigung der OH-Funktionalitäten sind beispielsweise Methylierungsmittel.

Das Molekulargewicht der erhaltenen Polyethercarbonatpolyole mit ungesättigten Gruppen beträgt bevorzugt mindestens 400 g/mol, besonders bevorzugt 400 bis 1’000’000 g/mol und höchst bevorzugt 500 bis 60’000 g/mol. In einer alternativen Ausführungsform wird das Molekulargewicht des Polyethercarbonatpolyols vor der Vernetzung durch Verlängerung mit geeigneten Reagenzien erhöht. So ist es beispielsweise möglich, ein bifunktionelles Polyethercarbonatpolyol mit einem mittleren Molekulargewicht von ≥ 1’000 bis ≤ 20’000 herzustellen und dieses anschließend auf ein mittleres Molekulargewicht von ≥ 10’000 bis ≤ 5’000’000 zu verlängern. Bevorzugt haben verlängerte Polyethercarbonatpolyol ein Molekulargewicht von ≥ 100’000 bis ≤ 50’000’000 und besonders bevorzugt von ≥ 500’000 bis ≤ 5’000’000. Geeignete Reagenzien für die Verlängerung der Polyethercarbonatpolyole sind beispielsweise Diisocyanate wie Hexamethylendiisocyanat (HDI), Methylendiphenyldiisocyanat (MDI) oder Toluendiisocyanat (TDI).

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (I),

$$HO-(CH_2)_X-OH \qquad (I)$$

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (I) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Doppelmetallcyanid (DMC)-Katalysatoren zur Verwendung in der Homopolymerisation von Epoxiden sind im Prinzip aus dem Stand der Technik bekannt (siehe z.B. US-A 3 404 109, US-A 3 829 505, US-A 3 941 849 und US-A

5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (II) auf,

$$M(X)_n \qquad (II),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (III) auf,

$$M_r(X)3 \qquad (III),$$

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$$M(X)_s \qquad (IV),$$

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (V) auf,

$$M(X)_t \qquad (V),$$

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (VI) auf

$$(Y)_aM'(CN)_b(A)_c \qquad (VI),$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VII)

$$M_x[M'_{x'}(CN)_y]_z \qquad (VII),$$

worin M wie in den Formeln (II) bis (V) und
M' wie in Formel (VI) definiert ist, und
x, x', y und z ganzzahlig sind und so gewählt, dass die Elektronenneutralität der Doppelmetallcyanidverbindung gegeben ist.

Vorzugsweise ist

x=3, x'=1, y=6 und z=2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-coacrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem

ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Die ungesättigten Comonomere können statistisch oder blockweise in den Polyethercarbonatpolyolen verteilt sein. Auch Gradientenpolymere sind einsetzbar.

Weitere Ausführungsformen und Aspekte der Erfindung werden nachfolgend erläutert. Sie können beliebig miteinander kombiniert werden, sofern sich aus dem Kontext nicht eindeutig das Gegenteil ergibt.

In einer weiteren Ausgestaltung des Verfahrens ist die ungesättigte Verbindung gemäß ($\gamma$2) ein ungesättigtes cyclisches Anhydrid mit einer Doppelbindung benachbart zu einer Carbonylgruppe. Ungesättigte cyclische Anhydride mit einer Doppelbindung benachbart zu einer Carbonylgruppe lassen sich mittels des erfindungsgemäßen Verfahrens unter hohen Umsätzen und äußerst selektiv zum Aufbau von Polyethercarbonatpolyolen mit ungesättigten Gruppen nutzen. Durch Einbau der cyclischen Anhydride enthält das gebildete Polyethercarbonatpolyol zusätzlich Estergruppen. Der einfache Einbau der ungesättigten cyclischen Anhydride in das gebildete Polyethercarbonatpolyole ist hochwahrscheinlich bedingt durch eine gute Wechselwirkung dieser Monomere mit dem DMC-Katalysator, welches zu einer ausreichenden Reaktivität dieser Substanzklasse führt. Des Weiteren kann insbesondere eine Carbonyl-Substitution benachbart zur Doppelbindung zu einer reduzierten Elektronendichte spezieller Doppelbindungen innerhalb der Polyethercarbonatpolyole mit ungesättigten Gruppen führen, welche sich gut innerhalb weiterer radikalischer Reaktionen umsetzen lassen.

In einem zusätzlichem Aspekt des Verfahrens entspricht die ungesättigte Verbindung gemäß ($\gamma$2) einer der Formeln (VIII), (IX) oder (X),

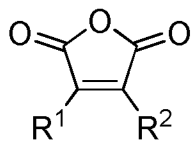
(VIII)

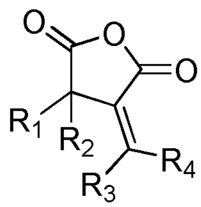
(IX)

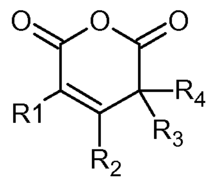
(X)

wobei $R_1$ - $R_4$ unabhängig voneinander H, Halogen, substituierte oder nicht-substituierte C1-C22-Alkyl, substituierte oder nicht-substituierte C6-C12 Aryl sind. Zur Einführung elektronenarmer Doppelbindung in das Polyethercarbonatpolyol mit ungesättigten Gruppen haben sich oben dargestellte cyclische Anhydride mit dem beschriebenen Substitutionsmuster als besonders vorteilhaft erwiesen. Zum einen erfolgt deren Umsetzung innerhalb des erfindungsgemäßen Verfahrens im hohen Maße vollständig und mit hoher Geschwindigkeit und zum anderen können weitere radikalische Umsetzungen, zum Beispiel Vernetzungsreaktionen, ohne Probleme durchgeführt werden. Ohne durch die Theorie gebunden zu sein kann dies hochwahrscheinlich auf die wenig raumgreifenden Substituenten und damit auf eine ungehinderte Zugänglichkeit der Doppelbindung zurückgeführt werden.

Bevorzugte Verbindungen der Formel (VIII), (IX) und (X) sind Maleinsäureanhydrid, Itaconsäureanhydrid, Chlormaleinsäureanhydrid, und Dichlormaleinsäureanhydrid. Besonders bevorzugt ist Maleinsäureanhydrid.

Weitere ungesättigte Verbindungen gemäß ($\gamma$2) sind gemischte Ester der der Fumar- oder Maleinsäure, enthaltend einen Glycidylester und einen Ester eines C1 bis C22 Alkanols, eines C5 bis C15 Cycloalkanols oder C7 bis C14 Aralkanols. Verbindungen dieser Gruppen sind Glycidyl-methyl-fumarat, Glycidyl-methyl-maleinat, Ethyl-glycidyl-fumarat, Ethyl-glycidyl-maleinat, Butyl-glycidyl-fumarat, Butyl-glycidyl-maleinat, Cyclohexyl-glycidyl-fumarat, Cyclohexyl-glycidyl-maleinat, Benzyl-glycidyl-fumarat oder Benzyl-glycidyl-maleinat.

Verbindungen, die sowohl der Gruppe ($\gamma$2) als auch der Gruppe ($\gamma$1) angehören sind ebenfalls gemischte Ester

der Fumar- oder Maleinsäure, enthaltend einen Glycidylester und einen Ester eines doppelbindungshaltigen Alkohols. Verbindungen dieser Gruppe sind Allyl-glycidyl-fumarat, Allyl-glycidyl-maleinat und die Ester der Fumar- oder Maleinsäure mit Glycidol und Trimethylolpropandiallylether.

In einer weiteren Charakteristik des Verfahrens ist die ungesättigte Verbindung gemäß (γ2) ein ungesättigtes Epoxid ausgewählt aus der Gruppe der Glycidylester α,β-ungesättigter Säuren. Auch die Glycidylester α,β-ungesättigter Säuren zeigen eine selektive und schnelle Reaktion zum Aufbau des Polyethercarbonatpolyols mit ungesättigten Gruppen. Dies wahrscheinlich bedingt durch ihren besonderen sterischen Aufbau, welcher eine gute Wechselwirkung mit dem DMC-Katalysator ermöglicht. Des Weiteren zeigen die derart in das Polyethercarbonatpolyol eingebauten, ungesättigten Gruppen gute sterische und elektronische Voraussetzung, um im Rahmen weiterer radikalisch initiierte Reaktionen schnell und in hohen Ausbeuten umgesetzt werden zu können.

In einer weiteren Ausgestaltung des Verfahrens entspricht die ungesättigte Verbindung gemäß (γ2) der folgenden Formel (XI):

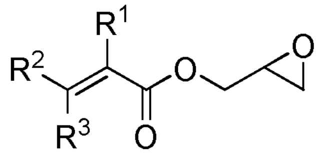

(XI),

wobei $R_1$ - $R_3$ unabhängig voneinander H, Halogen, substituierte oder nicht-substituierte C1-C22-Alkyl, substituierte oder nicht-substituierte C6-C12 Aryl sind. Die Verbindungen nach obiger Formel (XI) zeigen als bevorzugte Vertreter der Gruppe der Glycidylester α,β-ungesättigter Säuren ein Substitutionsmuster, welches sich in besonderer Weise zum Aufbau von Polyethercarbonatpolyolen mit ungesättigten Gruppen eignet. Diese Verbindungsklasse lässt sich mittels des erfindungsgemäß einsetzbaren DMC-Katalysators mit hohen Ausbeuten zu Polyethercarbonatpolyolen mit ungesättigten Gruppen umsetzten. Des Weiteren können sich durch die sterischen und elektronischen Voraussetzungen im Bereich der Doppelbindung, gute Möglichkeiten zur weiteren Umsetzung zu höhermolekularen, vernetzten Polyethercarbonaten ergeben. Besonders bevorzugte Verbindungen sind Glycidylacrylat oder Glycidylmethacrylat.

Andere Glycidylester der Gruppe (γ2) sind Glycidylcinnamat oder Glycidylsorbat.

Des Weiteren kann innerhalb einer bevorzugten Ausführungsform des Verfahrens die Temperatur im Schritt (γ) größer oder gleich 60°C und kleiner oder gleich 150 °C betragen. In einer besonders bevorzugten Ausführungsform des Verfahrens kann die Temperatur im Schritt (γ) größer oder gleich 80°C und kleiner oder gleich 130 °C und ganz besonders bevorzugt größer oder gleich 90°C und kleiner oder gleich 120 °C betragen. Dieser Temperaturbereich während der Polymerisation hat sich als besonders geeignet erwiesen, um mit einer hinreichenden Reaktionsgeschwindigkeit und mit einer hohen Selektivität die Polyethercarbonatpolyole mit ungesättigten Gruppen zu synthetisieren. Im Bereich niedrigerer Temperaturen kann sich eine nur ungenügende Reaktionsgeschwindigkeit einstellen und bei höheren Temperaturen kann der Anteil an unerwünschten Nebenprodukten zu stark ansteigen. Beispielsweise kann es bei Wahl zu hoher Temperaturen zu einer vorzeitigen Vernetzung der ungesättigten Gruppen kommen.

In einer weiteren Ausführungsform des Verfahrens ist die ungesättigte Verbindung gemäß (γ1) ausgewählt aus der Gruppe umfassend Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren (wie Ölsäure, Linolsäure, Konjuenfettsäure oder Linolensäure) und/oder teilweise epoxidierte Fette und Öle (wie teilweise epoxidiertes Sojaöl, Leinöl, Rapsöl, Palmöl oder Sonnenblumenöl).

Die oben aufgeführte Gruppe an Monomeren mit elektronenreicher Doppelbindung lässt sich hochwahrscheinlich aufgrund ihrer sterischen Gegebenheiten mit sehr hohen Ausbeuten und hinreichend schneller Reaktionskinetik zu Polyethercarbonatpolyolen mit ungesättigten Gruppen umsetzen. Die erhaltenen Polyethercarbonatpolyole weisen ungesättigte Gruppen mit einer elektronenreichen Doppelbindung auf und lassen sich im Rahmen weiterer Reaktionen, zum Beispiel in radikalischen Vernetzungsreaktionen, sehr gut zu höhermolekularen Polyethercarbonaten umsetzen.

In einer weiteren Ausführungsform des Verfahrens ist die ungesättigte Verbindung gemäß (γ1) ein cyclisches Anhydrid, das elektronenreiche Doppelbindungen enthält. Beispiele für solche cyclische Anhydride sind 4-Cyclohexen-1,2-disäureanhydrid, 4-Methyl-4-cyclohexen-1,2-disäureanhydrid, 5,6-Norbornen-2,3-disäureanhydrid, Dodecenylbernsteinsäureanhydrid, Tetradecenylbernsteinsäureanhydrid, Hexadecenylbernsteinsäureanhydrid oder Octadecenylbernsteinsäureanhydrid, wobei bei den Alkenylbemsteinsäureanhydriden die Doppelbindung keine exo-Doppelbindung am Ring ist. Durch Einbau solcher cyclischen Anhydride, die elektronenreiche Doppelbindungen enthalten, enthält das gebildete Polyethercarbonatpolyol zusätzlich Estergruppen.

In einer zusätzlichen Ausgestaltung des Verfahrens kann die ungesättigte Verbindung mit elektronenarmer Doppelbindung einer der Formeln (VIII), (IX), (X) oder (XI) entsprechen und die ungesättigte Verbindung mit elektronenreicher Doppelbindung aus der Gruppe umfassend Allylglycidylether, Vinylcyclohexenoxid, Cyclooctadienmonoepoxid, Cyclododecatrienmonoepoxide, Butadienmonoepoxid, Isoprenmonoepoxid oder Limonenoxid ausgewählt sein.

Des Weiteren erfindungsgemäß ist ein Polyethercarbonatpolyol aufweisend ungesättigte Gruppen, herstellbar nach dem erfindungsgemäßen Verfahren. Die nach dem erfindungsgemäßen Verfahren erhältlichen Polyethercarbonatpolyole mit ungesättigten Gruppen unterschiedlicher Elektronendichte können sich durch einen sehr niedrigen Restanteil an nicht reagierten Monomeren und eine niedrige Viskosität auszeichnen. Die Doppelbindungen an der Polymerkette sind sterisch durch das Polymergerüst nur wenig abgeschirmt und derart leicht für weitere Reaktionen zugänglich. Gerade die Mischung unterschiedlich elektronenreicher Doppelbindungen kann dabei die weitere radikalische Umsetzung vereinfachen.

In einer weiteren Ausführungsform beträgt das Molverhältnis der Doppelbindungen mit Substituenten gemäß (γ1) zu Doppelbindungen mit Substituenten gemäß (γ2) einschließlich der von cyclischen Anhydriden stammenden Struktureinheiten im Polymer kleiner oder gleich 3:1 und größer oder gleich 1:3, bevorzugt kleiner oder gleich 2:1 und größer oder gleich 1:2 und ganz besonders bevorzugt kleiner oder gleich 1,3:1 und größer oder gleich 1:1,3.

Überraschenderweise hat sich herausgestellt, dass Polyethercarbonatpolyole mit ungesättigten Gruppen mit einem Verhältnis von elektronenarmen zu -reichen Doppelbindungen im oben angegeben Bereich besonders günstige Eigenschaften im Rahmen weiterer Vernetzungsreaktionen aufweisen können. So kann bei Polyethercarbonatpolyolen mit ungesättigten Gruppen mit größeren oder kleineren Verhältnissen die Reaktionskinetik von Vernetzungsreaktionen ungünstig beeinflusst werden. Dies derart, dass gegebenenfalls längere Vernetzungszeiten in Kauf genommen werden müssen oder eine nur unvollständige Umsetzung stattfindet.

In einer zusätzlichen Ausgestaltung des Verfahrens kann das Verhältnis von Carbonatester- zu Ethergruppen im Polyethercarbonatpolyol kleiner oder gleich 3:1 und größer oder gleich 1:3 3 betragen. Dieser mengenmäßige Bereich des Einbaus der ungesättigten Monomere und des $CO_2$ hat sich für die nach dem erfindungsgemäßen Verfahren herstellbaren Polyethercarbonatpolyole mit ungesättigten Gruppen als besonders günstig erwiesen. Vorteilhaft kann dieser Bereich insbesondere sowohl für die makroskopischen Eigenschaften des Polymers, wie zum Beispiel die Viskosität, als auch für die Reaktionsfreudigkeit im Rahmen weiterer Vernetzungsreaktionen sein. Innerhalb einer bevorzugten Charakteristik kann die Glastemperatur des Polyethercarbonatpolyols mit ungesättigten Gruppen größer oder gleich -60°C und kleiner oder gleich 80°C betragen. Des Weiteren kann die Glastemperatur des Polyethercarbonatpolyols mit ungesättigten Gruppen bevorzugt kleiner oder gleich 50°C und besonders bevorzugt kleiner oder gleich 30°C betragen. Die untere Grenze der Glastemperatur kann bevorzugt -40°C und weiterhin bevorzugt -20 °C betragen. Dieser Bereich der Glastemperaturen ist für eine einfache Verarbeitung der Polymere vorteilhaft. Dies aus dem Grunde, da der angegebene Bereich der Glasübergangstemperaturen mit einer vorteilhaften Viskosität der Polymere verknüpft ist. Höhere Glasübergangstemperaturen sind hingegen unvorteilhaft, da die Viskosität des Polyethercarbonatpolyols mit ungesättigten Gruppen bei den üblichen Verarbeitungstemperaturen zu hoch ist, welches in der Regel bei weiteren Vernetzungsreaktionen eine nur unvollständige Umsetzung bewirkt. Ohne durch die Theorie gebunden zu sein, ergeben sich die vorteilhaften Glasübergangstemperaturen der erfindungsgemäßen Polyethercarbonatpolyole mit ungesättigten Gruppen durch ihren Aufbau der Polymerkette und die sterischen Ausprägungen der eingesetzten Monomere. Die Messung der Glasübergangstemperatur kann mit dem Fachmann bekannten Methoden, wie beispielsweise der DSC (Differential Scanning Calorimetry) oder DMA (Dynamisch Mechanische Analyse) bestimmt werden. Bevorzugt wird die Glastemperatur über DSC-Methoden nach ISO 6721-11 (Kunststoffe - Bestimmung dynamisch-mechanischer Eigenschaften - Teil 11: Glasübergangstemperatur) bestimmt.

Des Weiteren erfindungsgemäß ist ein Verfahren zur Vernetzung von Polyethercarbonatpolyolen enthaltend ungesättigte Gruppen, wobei die ungesättigten Gruppen umfassen:

(δ1) Doppelbindungen umfassend einen Substituenten ausgewählt aus der Gruppe $-OX^1$,$-OCOX^1$, $-X^1$, $-CH_2OX^1$ und/oder $-CH{=}CHX^1$ und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;

und

(δ2) Doppelbindungen umfassend einen Substituenten ausgewählt aus der Gruppe -F, -Cl, -Br,-I, -COH, $-COX^2$, $-COOX^2$, -C≡N und/oder $-NO_2$ und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht

und die Polyethercarbonatpolyole unter Zugabe eines Initiators ausgewählt aus der Gruppe der Photoinitiatoren, metallaktivierten Peroxiden und/oder Redoxinitiatoren untereinander zur Reaktion gebracht werden.

Innerhalb dieses weiteren Verfahrensschrittes können dabei sowohl Mischungen aus Polyethercarbonatpolyolen enthaltend elektronenreiche Doppelbindungen mit Polyethercarbonatpolyolen enthaltend elektronenarme Doppelbindungen sowie Polyethercarbonatpolyole enthaltend elektronenreiche und elektronenarme Doppelbindungen innerhalb desselben Moleküls miteinander zur Reaktion gebracht werden. Die radikalische Polymerisation kann mit

- Initiatoren, die in Myers, Terry N. Kirk-Othmer Encyclopedia of Chemical Technology (5th Edition) (2005), 14 274-311 oder in Bevington, John C. Makromolekulare Chemie, Macromolecular Symposia (1987), 10(1), 89;
- Photoinitiatoren, die in Fouassier, Jean Pierre; Allonas, Xavier; Lalevee, Jacques; Dietlin, Celine. Photochemistry and Photophysics of Polymer Materials (2010), 351-419;
- metallaktivierten Peroxiden, die in Sma, Christian, Angewandte Makromolekulare Chemie (1969), 9 165-181 oder
- Redoxinitiatoren, die in Misra, G. S.; Bajpai U. D. N. Progress in Polymer Science (1982) 8 (1-2), 61-131

beschrieben sind gestartet werden. Die Radikalinitiatoren können in Mengen von 0,01-2 Gew.-% bezogen auf das Polyethercarbonatpolyol eingesetzt werden, wobei Redoxinitiatoren ein Gemisch aus einer oxidierenden und einer reduzierenden Substanz sind und Photoinitiatoren des Typ II des Zusatzes eines Wasserstoffdonors, wie eines Amins oder einer Mercaptoverbindung, bedürfen.

In einer weiteren Ausgestaltung des Verfahrens kann eine Mischung aus Polyethercarbonatpolyolen mit ungesättigten Gruppen umfassend Doppelbindungen gemäß ($\delta$1) und aus Polyethercarbonatpolyolen mit ungesättigten Gruppen umfassend Doppelbindungen gemäß ($\delta$2) vernetzt werden. Zum erfindungsgemäßen Verfahren gehört also nicht nur die Umsetzung von Polyethercarbonatpolyolen mit ungesättigten Gruppen, welche elektronenreiche und -arme Gruppen innerhalb desselben Polymers ausweisen, sondern auch die Umsetzung zweier unterschiedlicher Polymerspezies mit ungesättigten Gruppen, von deren eine nur elektronenreiche und die andere nur elektronenarme Doppelbindungen aufweist. Insbesondere eine Vernetzungsreaktion zwischen diesen beiden unterschiedlichen Polymerspezies kann zu einer ähnlich vorteilhaften Verfahrensführung beitragen, wie die Verwendung nur einer Polymerspezies mit beiden Doppelbindungsarten.

Innerhalb einer bevorzugten Ausführungsform des Verfahrens kann der Initiator in einer Menge von größer oder gleich 0,01 Gew.-% und kleiner oder gleich 2 Gew.-% bezogen auf das Polyethercarbonatpolyol zugegeben werden. Vorteilhafterweise kann zur Vernetzung der Polyethercarbonatpolyole mit ungesättigten Gruppen die oben angegebene Initiatormenge Verwendung finden. Kleinere Konzentrationen an Initiator können zu einer zu ungleichmäßigen und zu langsamen Reaktion der ungesättigten Gruppen in den einzelnen Polyethercarbonatpolyol-Molekülen führen, wohingegen höhere Initiatorkonzentrationen zu einer schwer kontrollierbaren Reaktion, mit schlecht reproduzierbaren Produkteigenschaften führen kann.

Des Weiteren erfindungsgemäß ist ein vernetztes Polyethercarbonat erhältlich nach dem erfindungsgemäßen Vernetzungsverfahren. Die nach dem erfindungsgemäßen Verfahren erhältlichen vernetzten Polyethercarbonate zeigen reproduzierbare mechanische Eigenschaften. Dies wird wahrscheinlich durch eine vorteilhafte Viskosität der eingesetzten Edukte und eine vorteilhafte Vernetzungsreaktion durch Einsatz elektronenreicher und elektronenarmer Doppelbindungen bedingt. Dies kann, im Vergleich zur Verwendung nur eine Doppelbindungsart, deutlich vorteilhafter sein.

Die vernetzten Polyethercarbonate, welche so erhältlich sind, können als Kautschuke, Dichtmassen, Klebstoffe, Lacke oder duromere Formkörper Verwendung finden. Sie sind aus einfach zu verarbeitenden, flüssigen Ausgangsprodukten zugänglich und enthalten im Gegensatz zu ungesättigten Polyestern keine niedermolekularen Monomere, wie Styrol, Vinylether oder Vinylester. Ferner können die zu härtenden Mischungen lösungsmittelfrei sein. Auch für Druckfarben, Lithographie oder Stereolithographie (Rapid Prototyping) können die vernetzten Polyethercarbonate einsetzbar sein.

Ein weiterer Gegenstand der vorliegenden Erfindung ist eine Zusammensetzung, umfassend:

- ein erstes Polyethercarbonatpolyol enthaltend Doppelbindungen, wobei die Doppelbindungen einen Substituenten umfassen, der ausgewählt ist aus der Gruppe $-OX^1$, - $OCOX^1$, $-X^1$, $-CH_2OX^1$ und/oder $-CH=CHX^1$ umfasst und wobei $X^1$ jeweils für substituiertes oder unsubstituiertes Alkyl, substituiertes oder unsubstituiertes Cycloalkyl, substituiertes, substituiertes oder unsubstituiertes Aryl oder eine substituierte oder unsubstituierte Methylenkette steht; und

- ein zweites Polyethercarbonatpolyol enthaltend Doppelbindungen, wobei die Doppelbindungen einen Substituenten umfassen, der ausgewählt ist aus der Gruppe -F, -Cl, -Br, -I, -COH, $-COX^2$, $-COOX^2$, -C=N und/oder $-NO_2$ umfasst und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht.

Diese Zusammensetzung kann gemäß dem vorstehend beschriebenen Verfahren vernetzt werden. Insofern kann sie als eine Mischung umfassend Polyethercarbonatpolyole mit ungesättigten Gruppen gemäß ($\delta$1) und aus Polyethercarbonatpolyolen mit ungesättigten Gruppen umfassend Doppelbindungen gemäß ($\delta$2) beschrieben werden.

Das erste und das zweite Polyethercarbonatpolyol können in Analogie zum erfindungsgemäßen Verfahren zur

Herstellung von Polyethercarbonatpolyolen mit ungesättigten Gruppen hergestellt werden, wobei in Schritt (γ) jeweils nur eine der Verbindungsgruppen (γ1) oder (γ2) eingesetzt werden.

Des Weiteren erfindungsgemäß ist ein Formkörper mit einer Schicht umfassend ein erfindungsgemäßes vernetztes Polyethercarbonat. Die erfindungsgemäß herstellbaren, vernetzten Polyethercarbonate können sich besonders zum Aufbau mechanisch stabiler Schichten auf Formkörpern eigenen, da sich die erfindungsgemäßen Polyethercarbonatpolyole einfach und reproduzierbar auf Formkörpern platzieren lassen und ein weitere Vernetzungsreaktionen, zum Beispiel mit Radikalinitiatoren, einfach und reproduzierbar durchführbar ist.

Hinsichtlich weiterer Vorteile und Merkmale des vorbeschriebenen Formkörpers wird hiermit explizit auf die Erläuterungen im Zusammenhang mit den erfindungsgemäßen Polyethercarbonatpolyolen sowie dem erfindungsgemäßen Verfahren verwiesen. Auch sollen erfindungsgemäße Merkmale und Vorteile der Polyethercarbonatpolyole auch für das erfindungsgemäße Verfahren und die erfindungsgemäßen Formkörper anwendbar sein und als offenbart gelten und umgekehrt. Unter die Erfindung fallen auch sämtliche Kombinationen aus zumindest zwei von in der Beschreibung und/oder den Ansprüchen offenbarten Merkmalen.

In einer ersten Ausführungsform betrifft die Erfindung somit ein Verfahren zur Herstellung von Polyethercarbonatpolyolen, wobei die Polyethercarbonatpolyole Doppelbindungen enthalten, umfassend die Schritte:

(α) Vorlegen eines Katalysators und:

(αα) eines Suspensionsmittels, das keine H-funktionellen Gruppen enthält und/oder
(αβ) einer H-funktionellen Starterverbindung

(γ) Zudosieren von Kohlendioxid, eines Epoxides, das keine ungesättigte Gruppe enthält, und mindestens zweier ungesättigter Verbindungen,

dadurch gekennzeichnet, dass die in Schritt (γ) zudosierten ungesättigten Verbindungen aus der Gruppe der ungesättigten Epoxide und/oder ungesättigten cyclischen Anhydride ausgewählt sind, wobei

(γ1) eine der ungesättigten Verbindungen eine Doppelbindung umfassend mindestens einen Substituenten ausgewählt aus der Gruppe $-OX^1$, $-OCOX^1$, $-X^1$, $-CH_2OX^1$ und/oder $-CH=CHX^1$ umfasst und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;
(γ2) und eine andere der ungesättigten Verbindungen eine Doppelbindung umfassend mindestens einen Substituenten ausgewählt aus der Gruppe -F, -Cl, -Br, -I, -COH, $-COX^2$, $- COOX^2$, -C=N und/oder $-NO_2$ umfasst oder ein ungesättigtes, substituiertes oder unsubstituiertes cyclisches Anhydrid ist und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht

und wobei weiterhin für den Fall, dass in Schritt (α) keine H-funktionelle Starterverbindung vorgelegt wurde, Schritt (γ) das Zudosieren einer H-funktionellen Starterverbindung umfasst.

In einer zweiten Ausführungsform betrifft die Erfindung ein Verfahren gemäß der ersten Ausführungsform, weiterhin umfassend den Schritt (β) zwischen Schritt (α) und Schritt (γ):

(β) Zudosieren mindestens eines Epoxides

In einer dritten Ausführungsform betrifft die Erfindung ein Verfahren gemäß der ersten oder zweiten Ausführungsform, wobei der Katalysator ein DMC-Katalysator ist.

In einer vierten Ausführungsform betrifft die Erfindung ein Verfahren gemäß einer der Ausführungsformen 1 bis 3, wobei die ungesättigte Verbindung gemäß (γ2) ein ungesättigtes cyclisches Anhydrid mit einer Doppelbindung benachbart zu einer Carbonylgruppe ist.

In einer fünften Ausführungsform betrifft die Erfindung ein Verfahren gemäß einer der Ausführungsformen 1 bis 4, wobei die ungesättigte Verbindung gemäß (γ2) ein ungesättigtes Epoxid ausgewählt aus der Gruppe der Glycidylester α,β-ungesättigter Säuren ist.

In einer sechsten Ausführungsform betrifft die Erfindung ein Verfahren gemäß einer der Ausführungsformen 1 bis 5, wobei die Temperatur im Schritt (γ) größer oder gleich 60°C und kleiner oder gleich 150 °C beträgt.

In einer siebten Ausführungsform betrifft die Erfindung ein Verfahren gemäß einer der Ausführungsformen 1 bis 6, wobei die ungesättigte Verbindung gemäß (γ1) ausgewählt ist aus der Gruppe umfassend Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren und/oder teilweise epoxidierte Fette und Öle.

In einer achten Ausführungsform betrifft die Erfindung ein Polyethercarbonatpolyol aufweisend ungesättigte Gruppen, herstellbar nach einem Verfahren nach einem der vorgenannten Ausführungsformen.

In einer neunten Ausführungsform betrifft die Erfindung ein Polyethercarbonatpolyol gemäß der achten Ausführungsform, wobei das Molverhältnis der Doppelbindungen mit Substituenten gemäß ($\gamma$1) zu Doppelbindungen mit Substituenten gemäß ($\gamma$2) einschließlich der von cyclischen Anhydriden stammenden Struktureinheiten im Polymer kleiner oder gleich 3:1 und größer oder gleich 1:3 beträgt.

In einer zehnten Ausführungsform betrifft die Erfindung ein Polyethercarbonatpolyol gemäß der achten oder neunten Ausführungsform, wobei die Glastemperatur des Polyethercarbonatpolyols mit ungesättigten Gruppen größer oder gleich -60°C und kleiner oder gleich 80°C beträgt.

In einer elften Ausführungsform betrifft die Erfindung ein Verfahren zur Vernetzung von Polyethercarbonatpolyolen enthaltend ungesättigte Gruppen, wobei die ungesättigten Gruppen umfassen:

($\delta$1) Doppelbindungen umfassend mindestens einen Substituenten ausgewählt aus der Gruppe-$OX^1$, -$OCOX^1$, -$X^1$, -$CH_2OX^1$ und/oder -$CH{=}CHX^1$ und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;

und

($\delta$2) Doppelbindungen umfassend mindestens einen Substituenten ausgewählt aus der Gruppe-F, -Cl, -Br, -I, -COH, -$COX^2$, -$COOX^2$, -C≡N und/oder -$NO_2$ und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht

und die Polyethercarbonatpolyole unter Zugabe eines Initiators ausgewählt aus der Gruppe der Photoinitiatoren, metallaktivierten Peroxiden und/oder Redoxinitiatoren untereinander zur Reaktion gebracht werden.

In einer zwölften Ausführungsform betrifft die Erfindung ein Verfahren gemäß der elften Ausführungsform, wobei eine Mischung aus Polyethercarbonatpolyolen umfassend Doppelbindungen gemäß ($\delta$1) und aus Polyethercarbonatpolyolen umfassend Doppelbindungen gemäß ($\delta$2) vernetzt wird.

In einer dreizehnten Ausführungsform betrifft die Erfindung ein vernetztes Polyethercarbonat, herstellbar nach einem Verfahren gemäß der elften oder zwölften Ausführungsform.

In einer vierzehnten Ausführungsform betrifft die Erfindung die Verwendung vernetzter Polyethercarbonate gemäß der dreizehnten Ausführungsform als Kautschuke, Dichtmassen, Klebstoffe, Lacke oder duromere Formkörper.

In einer fünfzehnten Ausführungsform betrifft die Erfindung eine Zusammensetzung, umfassend:

- ein erstes Polyethercarbonatpolyol enthaltend Doppelbindungen, wobei die Doppelbindungen einen Substituenten umfassen, der ausgewählt ist aus der Gruppe -$OX^1$, - $OCOX^1$, -$X^1$, -$CH_2OX^1$ und/oder -$CH{=}CHX^1$ umfasst und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht; und
- ein zweites Polyethercarbonatpolyol enthaltend Doppelbindungen, wobei die Doppelbindungen einen Substituenten umfassen, der ausgewählt ist aus der Gruppe-F, -Cl, -Br, -I, -COH, -$COX^2$, -$COOX^2$, -C=N und/oder -$NO_2$ umfasst und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht.

## Beispiele

**Substanzen:**

Eingesetzte H-funktionelle Startersubstanz (Starter):

PET-1 difunktionelles Poly(oxypropylen)polyol mit einer OH-Zahl von 112 $mg_{KOH}$/g

Eingesetztes Epoxid ohne Doppelbindungen:

PO Propylenoxid

Eingesetzte Verbindung enthaltend elektronenarme Doppelbindungen:

MSA Maleinsäureanhydrid

Eingesetzte Verbindung enthaltend elektronenreiche Doppelbindungen:

AGE Allylglycidylether

Der DMC-Katalysator wurde hergestellt nach Beispiel 6 der WO-A 01/80994.

**Methoden:**

OH-Zahl (Hydroxylzahl)

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert und die Endpunktserkennung erfolgte mittels Potentiometrie. Als Prüfsubstanz diente zertifiziertes Rizinusöl. Die Angabe der Einheit in "mg KOH/g" bezieht sich auf mg[KOH]/g[Polyethercarbonatpolyol].

Gelpermeationschromatographie

Das Zahlenmittel $M_n$ und das Gewichtsmittel $M_w$ des Molekulargewichts der entstandenen Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität wurde als das Verhältnis $M_w/M_n$ berechnet.

Rheologie

Die Viskosität des Produktgemisches wurde mit einem Rheometer Physica MCR 501 der Firma Anton Paar bei 25°C bestimmt, wobei eine Kugel-Platte-Konfiguration mit einem Kugeldurchmesser von 25 mm mit einem Abstand von 0,05 mm zwischen Kugel und Platte verwendet wurden. Die Scherrate wurde innerhalb von 10 min von 0,01 auf 1000 1/s gesteigert. Alle 10 s wurde ein Wert genommen. Angegeben ist die Viskosität als der Durchschnitt der insgesamt 60 Messwerte.

Thermische Analyse

Die Glasübergangstemperatur wurde mit einem Mettler Toledo DSC 1 gemessen. Es wurden zwischen 4 und 10 mg der zu vermessenden Probe mit einer Heizrate von 10 K/min von -80°C auf 40 °C erhitzt. Als Auswertungssoftware wurde STAR$^e$ 25 SW 11.00 verwendet. Zur Ermittlung der Glasübergangstemperatur wurde, sofern nicht anders erwähnt, ein tangentielles Auswertungsverfahren angewendet. Als Glasübergangstemperatur wird der Mittelpunkt zwischen dem Schnittpunkt der mittleren Tangente mit der Tieftemperaturtangente und dem Schnittpunkt der mittleren Tangente mit der Hochtemperaturtangente angegeben.

$^1$H-NMR Spektroskopie

Die Probe wurde in deuteriertem Chloroform gelöst und auf einem Spektrometer der Firma Bruker (AV400, 400 MHz) vermessen.

**Herstellung der Polyethercarbonatpolyole mit ungesättigten Gruppen:**

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einem Temperaturanstieg im Reaktor. Das Auftreten einer Wärmeentwicklung im Reaktor, hervorgerufen durch die kontinuierliche Umsetzung von Propylenoxid und der Verbindungen enthaltend Doppelbindungen während der Reaktion [Polymerisationsstufe] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Rührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

a) Bei der Terpolymerisation von Propylenoxid, mindestens zweier ungesättigter Verbindungen und $CO_2$ resultiert neben dem cyclischen Propylencarbonat das Polyethercarbonatpolyol mit ungesättigten Gruppen, welches einerseits in Formel (XIIa) gezeigte Polycarbonat-Einheiten enthält,

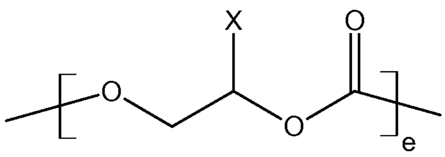 bzw. 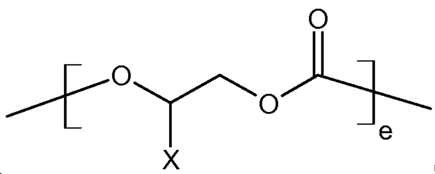 (XIIa)

und andererseits in Formel (XIIb) gezeigte Polyether-Einheiten enthält:

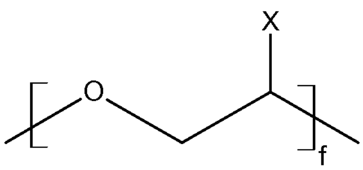 bzw. 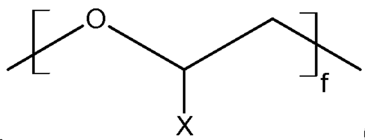 (XIIb).

Die Charakterisierung des Reaktionsgemisches erfolgte durch $^1$H-NMR Spektroskopie und Gelpermeationschromatographie.

Das Verhältnis der Menge an cyclischem Propylencarbonat zu Polyethercarbonatpolyol (Selektivität; Verhältnis g/e) sowie der Anteil der nicht umgesetzten Monomere (Propylenoxid $R_{PO}$, Allylglycidylether $A_{Doppelbindung}$ in mol%, Maleinsäureanhydrid $B_{Doppelbindung}$ in mol%) wurden mittels $^1$H-NMR Spektroskopie bestimmt.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyethercarbonatpolyol (Verhältnis e/f) sowie der molare Anteil von in das Polymer eingebautem Allylglycidylether und Maleinsäureanhydrid wurden mittels $^1$H-NMR Spektroskopie bestimmt.

Die relevanten Resonanzen im $^1$H-NMR Spektrum (bezogen auf TMS = 0 ppm), die zur Integration verwendet wurden, ergeben sich wie folgt:

| Signal | Verschiebung in ppm | Bezeichnung | Fläche entspricht Anzahl H-Atomen |
|---|---|---|---|
| I1 | 1,10 - 1,17 | $CH_3$-Gruppe der Polyether-Einheiten | 3 |
| I2 | 1,25 - 1,34 | $CH_3$-Gruppe der Polycarbonat-Einheiten | 3 |
| I3 | 1,45 - 1,48 | $CH_3$-Gruppe des cyclischen Carbonats | 3 |
| I4 | 2,95 - 3,00 | CH-Gruppen des freien, nicht abreagierten Propylenoxids | 1 |
| I5 | 5,83 - 5,94 | CH Gruppe der in das Polymer über den Einbau von Allylglycidylether erhaltenen Doppelbindung | 1 |
| I6 | 6,22 - 6,29 | CH Gruppe der in das Polymer über den Einbau von Maleinsäureanhydrid erhaltenen Doppelbindung | 2 |
| I7 | 7,03 - 7,04 | CH Gruppe für freies, nicht abreagiertes Maleinsäureanhydrid | 2 |
| I8 | 2,85 - 2,90 | CH-Gruppen des freien, nicht abreagierten Allylglycidylethers | 1 |

Angegeben ist das molare Verhältnis der Menge an cyclischem Propylencarbonat zu Carbonat-Einheiten im Polyethercarbonatpolyol (Selektivität g/e) und das molare Verhältnis von Carbonatzu Ethergruppen im Polyethercarbonatpolyol (e/f) sowie die Anteile des nicht umgesetzten Propylenoxids (in mol%) und Maleinsäureanhydrids (in mol%).

Unter Berücksichtigung der relativen Intensitäten wurden die Werte wie folgt berechnet:

Molares Verhältnis der Menge an cyclischem Propylencarbonat zu Carbonat-Einheiten im Polyethercarbonatpolyol (Selektivität g/e):

$$g/e = I3 / I2$$

Molares Verhältnis von Carbonatgruppen zu Ethergruppen im Polyethercarbonatpolyol (e/f):

$$e/f = I2 / I1$$

Der Anteil an Carbonateinheiten in den Wiederholungseinheiten des Polyethercarbonatpolyols erhalten aus der Copolymerisation von Propylenoxid und $CO_2$:

$$C_{Carbonat} = [(I2/3) / ((I1/3) + (I2/3))] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [(I4) / ((I1/3) + (I2/3) + (I3/3) + (I4))] \times 100\%$$

Der Anteil an Carbonateinheiten in den Wiederholungseinheiten des Polyethercarbonatpolyols erhalten aus der Terpolymerisation von Propylenoxid, Allylglycidylether und $CO_2$:

$$C'_{Carbonat} = [(I2/3) / ((I1/3) + (I2/3) + (I5))] \times 100\%$$

Der Anteil der über den Einbau des Allylglycidylethers resultierenden Doppelbindungen in den Wiederholungseinheiten des Polyethercarbonatpolyols:

$$A_{Doppelbindung} = [(I5) / ((I1/3) + (I2/3) + (I5))] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R'_{PO} = [(I4) / ((I1/3) + (I2/3) + (I3/3) + (I4) + (I5) + (I8))] \times 100\%$$

Der molare Anteil des nicht umgesetzten Allylglycidylethers ($R_{AGE}$ in mol%) bezogen auf die Summe der bei der Aktivierung und der Copolymerisation eingesetzten Menge an Maleinsäureanhydrid, berechnet sich nach der Formel:

$$R_{AGE} = [(I8) / ((I1/3) + (I2/3) + (I3/3) + (I4) + (I5) + (I8))] \times 100\%$$

Der Anteil an Carbonateinheiten in den Wiederholungseinheiten des Polyetherestercarbonatpolyols erhalten aus der Terpolymerisation von Propylenoxid, Maleinsäureanhydrid und $CO_2$:

$$C''_{Carbonat} = [(I2/3) / ((I1/3) + (I2/3) + (I6/2))] \times 100\%$$

Der Anteil der über den Einbau des Maleinsäureanhydrids resultierenden Doppelbindungen in den Wiederholungseinheiten des Polyetherestercarbonatpolyols:

$$B_{Doppelbindung} = [(I6/2) / ((I1/3) + (I2/3) + (I6/2))] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R''_{PO} = [(I4) / ((I1/3) + (I2/3) + (I3/3) + (I4) + (I6/2) + (I7/2))] \times 100\%$$

Der molare Anteil des nicht umgesetzten Maleinsäureanhydrids ($R_{MSA}$ in mol%) bezogen auf die Summe der bei der Aktivierung und der Copolymerisation eingesetzten Menge an Maleinsäureanhydrid, berechnet sich nach der Formel:

$$R_{MSA} = [(I7/2) / ((I1/3) + (I2/3) + (I3/3) + (I4) + (I6/2) + (I7/2))] \times 100\%$$

Der Anteil an Carbonateinheiten in den Wiederholungseinheiten des Polyetherestercarbonatpolyols erhalten aus der Terpolymerisation von Propylenoxid, Allylglycidylether, Maleinsäureanhydrid und $CO_2$:

$$C'''_{Carbonat} = [(I2/3) / ((I1/3) + (I2/3) + (I5) + (I6/2))] \times 100\%$$

Der Anteil der über den Einbau des Allylglycidylethers resultierenden Doppelbindungen in den Wiederholungseinheiten des Polyetherestercarbonatpolyols:

$$A'_{Doppelbindung} = [(I5) / ((I1/3) + (I2/3) + (I5) + (I6/2))] \times 100\%$$

Der Anteil der über den Einbau des Maleinsäureanhydrids resultierenden Doppelbindungen in den Wiederholungseinheiten des Polyetherestercarbonatpolyols:

$$B'_{Doppelbindung} = [(I6/2) / ((I1/3) + (I2/3) + (I5) + (I6/2))] \times 100\%$$

Der molare Anteil des nicht umgesetzten Propylenoxids ($R''_{PO}$ in mol%) bezogen auf die Summe der bei der Aktivierung und der Copolymerisation eingesetzten Menge an Propylenoxid, berechnet sich nach der Formel:

$$R'''_{PO} = [(I4) / ((I1/3) + (I2/3) + (I3/3) + (I4) + (I5) + (I6/2) + (I7/2) + (I8))] \times 100\%$$

Der molare Anteil des nicht umgesetzten Allylglycidylethers ($R'_{AGE}$ in mol%) bezogen auf die Summe der bei der Aktivierung und der Copolymerisation eingesetzten Menge an Maleinsäureanhydrid, berechnet sich nach der Formel:

$$R'_{AGE} = [(I8) / ((I1/3) + (I2/3) + (I3/3) + (I4) + (I5) + (I6/2) + (I7/2) + (I8))] \times 100\%$$

Der molare Anteil des nicht umgesetzten Maleinsäureanhydrids ($R'_{MSA}$ in mol%) bezogen auf die Summe der bei der Aktivierung und der Copolymerisation eingesetzten Menge an Maleinsäureanhydrid, berechnet sich nach der Formel:

$$R'_{MSA} = [(I7/2) / ((I1/3) + (I2/3) + (I3/3) + (I4) + (I5) + (I6/2) + (I7/2) + (I8))] \times 100\%$$

Das Zahlenmittel $M_n$ und das Gewichtsmittel $M_w$ des Molekulargewichts der entstandenen Polyethercarbonatpolyole wurde mittels Gelpermeationschromatographie (GPC) bestimmt.

Terpolymer 1-1: Terpolymerisation einer Mischung von Propylenoxid, 4,3-Mol% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (8,2 Gew.-% Allylglycidylether [entsprechend 4,3 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 53,9 g der Monomermischung (8,2 Gew.-% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'_{PO}$ = 0%) und Allylglycidylether ($R_{AGE}$ = 0%).

| | | |
|---|---|---|
| Selektivität | g/e | 0,05 |
| | e/f | 0,23 |
| $C'_{Carbonat}$ in % | | 19,3 |
| $A_{Doppelbindung}$ in % | | 2,6 |
| Molekulargewicht in g/mol | $M_n$ | 5428 |
| Polydispersität | | 1,2 |
| OH-Zahl in $mg_{KOH}/g$ | | 26,0 |
| Viskosität in mPa.s | | 4'600 |

(fortgesetzt)

| | |
|---|---|
| Glasübergangstemperatur in °C | 53,8 |

Terpolymer 1-2: Terpolymerisation einer Mischung von Propylenoxid, 8,3 mol-% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (15,2 Gew.-% Allylglycidylether [entsprechend 8,3 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (15,2 Gew.-% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.
Das resultierende Gemisch war frei von den eingesetzten Monomeren Propylenoxid ($R'_{PO}$ = 0%) und Allylglycidylether ($R_{AGE}$ = 0%).

| | | |
|---|---|---|
| Selektivität | g/e | 0,06 |
| | e/f | 0,25 |
| $C'_{Carbonat}$ in % | | 20,3 |
| $A_{Doppelbindung}$ in % | | 6,4 |
| Molekulargewicht in g/mol | $M_n$ | 5446 |
| Polydispersität | | 2,0 |
| OH-Zahl in $mg_{KOH}/g$ | | 26,9 |
| Viskosität in mPa·s | | 4’000 |
| Glasübergangstemperatur in °C | | 56,7 |

Terpolymer 1-3: Terpolymerisation einer Mischung von Propylenoxid, 16,4 mol-%Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (30,4 Gew.% Allylglycidylether [entsprechend 16,4 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (30,4 Gew.% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'_{PO}$ = 0%) und Allylglycidylether ($R_{AGE}$ = 0%).

| | | |
|---|---|---|
| Selektivität | g/e | 0,09 |
| | e/f | 0,28 |
| $C'_{Carbonat}$ in % | | 22,2 |
| $A_{Doppelbindung}$ in % | | 13,6 |
| Molekulargewicht in g/mol | $M_n$ | 5432 |
| Polydispersität | | 1,8 |
| OH-Zahl in $Mg_{KOH}/g$ | | 28,6 |
| Viskosität in mPa·s | | 4'800 |
| Glasübergangstemperatur in °C | | 57,2 |

<u>Terpolymer 2-1:</u> Terpolymerisation einer Mischung von Propylenoxid, 4,1 mol-% Maleinsäureanhydrid und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (6,5 Gew.-% Maleinsäureanhydrid [entsprechend 4,1 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (6,5 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R''_{PO}$ = 0%) und Maleinsäureanhydrid ($R_{MSA}$ = 0%).

| | | |
|---|---|---|
| Selektivität | g/e | 0,05 |
| | e/f | 0,32 |
| $C''_{Carbonat}$ in % | | 23,5 |
| $B_{Doppelbindung}$ in % | | 2,7 |
| Molekulargewicht in g/mol | $M_n$ | 5293 |
| Polydispersität | | 1,7 |

(fortgesetzt)

| | |
|---|---|
| OH-Zahl in $Mg_{KOH}/g$ | 24,9 |
| Viskosität in mPa·s | 13'300 |
| Glasübergangstemperatur in °C | 48,7 |

Terpolymer 2-2: Terpolymerisation einer Mischung_von Propylenoxid, 8,4 mol-%Maleinsäureanhydrid und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (13,3 Gew.-% Maleinsäureanhydrid [entsprechend 8,4 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (13,3 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R''_{PO}$ = 0%) und Maleinsäureanhydrid ($R_{MSA}$ = 0%).

| | | |
|---|---|---|
| Selektivität | g/e | 0,02 |
| | e/f | 0,36 |
| $C''_{Carbonat}$ in % | | 24,9 |
| $B_{Doppelbindung}$ in % | | 6,1 |
| Molekulargewicht in g/mol | $M_n$ | 5657 |
| Polydispersität | | 2,2 |
| OH-Zahl in $Mg_{KOH}/g$ | | 27,1 |
| Viskosität in mPa·s | | 14'200 |
| Glasübergangstemperatur in °C | | 41,9 |

Terpolymer 2-3: Terpolymerisation von Propylenoxid, 16,6 mol-% Maleinsäureanhydrid und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen

einer Temperatur von 130°C wurden 2,0 g einer Monomermischung (26,2 Gew.-% Maleinsäureanhydrid [entsprechend 16,6 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (26,2 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R''_{PO}$ = 0%) und Maleinsäureanhydrid ($R_{MSA}$ = 0%).

| | | |
|---|---|---|
| Selektivität | g/e | 0,02 |
| | e/f | 0,52 |
| $C''_{Carbonat}$ in % | | 29,8 |
| $B_{Doppelbindung}$ in % | | 12,8 |
| Molekulargewicht in g/mol | $M_n$ | 4955 |
| Polydispersität | | 2,1 |
| OH-Zahl in $Mg_{KOH}$/g | | 25,6 |
| Viskosität in mPa·s | | 29’200 |
| Glasübergangstemperatur in °C | | 35,14 |

Beispiel 1: Block-Terpolymer, erhalten durch Terpolymerisation einer Mischung von Propylenoxid, 4,1 mol-% Maleinsäureanhydrid und $CO_2$, gefolgt von einer Terpolymerisation einer Mischung von Propylenoxid, 4,3 mol-% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (6,5 Gew.-% Maleinsäureanhydrid [entsprechend 4,1 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 23,9 g der Monomermischung (6,5 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Nach der Zugabe von Monomermischung (6,5 Gew.-% Maleinsäureanhydrid gelöst in Propylenoxid) wurden 30 g einer zweiten Monomermischung (8,2 Gew.-% Allylglycidylether [entsprechend 4,3 Mol%] gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'''_{PO}$ = 0%), Allylglycidylether ($R'_{AGE}$ = 0%) und Maleinsäureanhydrid ($R'_{MSA}$ = 0%).

| | | |
|---|---|---|
| Selektivität | g/e | 0,04 |
| | e/f | 0,48 |
| $C'''_{Carbonat}$ in % | | 36,3 |
| $A'_{Doppelbindung}$ in % | | 1,8 |
| $B'_{Doppelbindung}$ in % | | 1,2 |
| Molekulargewicht in g/mol | $M_n$ | 5225 |
| Polydispersität | | 1,4 |
| OH-Zahl in $Mg_{KOH}/g$ | | 24,8 |
| Viskosität in mPa·s | | 22'000 |
| Glasübergangstemperatur in °C | | 43,1 |

Beispiel 2: Block-Terpolymer, erhalten durch Terpolymerisation einer Mischung von Propylenoxid, 8,4 mol-% Maleinsäureanhydrid und $CO_2$, gefolgt von einer Terpolymerisation einer Mischung von Propylenoxid, 8,3 mol-% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (13,3 Gew.-% Maleinsäureanhydrid [entsprechend 8,4 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 24,0 g der Monomermischung (13,3 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Nach der Zugabe von Monomermischung (13,3 Gew.-% Maleinsäureanhydrid gelöst in Propylenoxid) wurden 30 g einer zweiten Monomermischung (15,2 Gew.-% Allylglycidylether [entsprechend 8,3 Mol%] gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'''_{PO}$ = 0%), Allylglycidylether ($R'_{AGE}$ = 0%) und Maleinsäureanhydrid ($R'_{MSA}$ = 0%).

| | | |
|---|---|---|
| Selektivität | g/e | 0,04 |
| | e/f | 0,37 |
| $C'''_{Carbonat}$ in % | | 27,2 |
| $A'_{Doppelbindung}$ in % | | 2,9 |
| $B'_{Doppelbindung}$ in % | | 3,3 |
| Molekulargewicht in g/mol | $M_n$ | 5113 |
| Polydispersität | | 1,8 |

(fortgesetzt)

| | |
|---|---|
| OH-Zahl in $Mg_{KOH}/g$ | 25,0 |
| Viskosität in mPa·s | 19’100 |
| Glasübergangstemperatur in °C | 45,2 |

Beispiel 3: Block-Terpolymer, erhalten durch Terpolymerisation einer Mischung von Propylenoxid, 16,6 mol-% Maleinsäureanhydrid und $CO_2$, gefolgt von einer Terpolymerisation einer Mischung von Propylenoxid, 16,4 mol-% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (26,2 Gew.-% Maleinsäureanhydrid [entsprechend 16,6 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 23,8 g der Monomermischung (26,2 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Nach der Zugabe von Monomermischung (26,2 Gew.-% Maleinsäureanhydrid gelöst in Propylenoxid) wurden 30 g einer zweiten Monomermischung (30,4 Gew.% Allylglycidylether [entsprechend 16,4 Mol%] gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'''_{PO}$ = 0%), Allylglycidylether ($R'_{AGE}$ = 0%) und Maleinsäureanhydrid ($R'_{MSA}$ = 0%).

| | | |
|---|---|---|
| Selektivität | g/e | 0,04 |
| | e/f | 0,56 |
| $C'''_{Carbonat}$ in % | | 36,3 |
| $A'_{Doppelbindung}$ in % | | 6,9 |
| $B'_{Doppelbindung}$ in % | | 7,2 |
| Molekulargewicht in g/mol | $M_n$ | 4340 |
| Polydispersität | | 3,4 |
| OH-Zahl in $Mg_{KOH}/g$ | | 24,3 |
| Viskosität in mPa·s | | 17’000 |
| Glasübergangstemperatur in °C | | 47,4 |

Beispiel 4 (Vgl.): Copolymerisation von Propylenoxid und $CO_2$ ohne Zugabe von Allylglycidylether oder Maleinsäureanhydrid

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g Propylenoxid wurde ein zweites und drittes Mal wiederholt.

[Polymerisationsstufe]

Nach Abkühlen auf 100°C wurden weitere 54,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.
Das resultierende Gemisch war frei von Propylenoxid ($R_{PO}$ = 0%).

| | | |
|---|---|---|
| Selektivität | g/e | 0,09 |
| | e/f | 0,26 |
| $C_{Carbonat}$ in % | | 20,7 |
| Molekulargewicht in g/mol | $M_n$ | 5495 |
| Polydispersität | | 1,4 |
| OH-Zahl in $Mg_{KOH}$/g | | 26,2 |
| Viskosität in mPa·s | | 7’900 |
| Glasübergangstemperatur in °C | | 54,4 |

Allgemeine Vorschrift für die radikalische Vernetzung der Polyethercarbonatpolyole enthaltend elektronenarme und elektronenreiche Doppelbindungen unter Redox-Initiierung

Eine Probe an Polyethercarbonatpolyol (2 g eines der Terpolymers 1-1 bis 1-6 oder eines der Block-Terpolymere aus Beispiel 1 - 3) wurde in Methylenchlorid gelöst und die Lösung mit Benzoylperoxid (10 mol-% bezogen auf die im Polyethercarbonatpolyol enthaltenen Doppelbindungen) versetzt. Das Methylenchlorid wurde anschließend mittels Rotationsverdampfer entfernt.
Eine weitere Probe an Polyethercarbonatpolyol (2 g) wurde in Methylenchlorid gelöst und die Lösung mit 4-Dimethylaminobenzoesäureetherester (10 mol-% bezogen auf die im Polyethercarbonatpolyol enthaltenen Doppelbindungen) versetzt. Das Methylenchlorid wurde anschließend mittels Rotationsverdampfer entfernt.
Die radikalische Vernetzung wurde auf einem Rheometer Physica MCR 501 der Fa. Anton Paar ausgestattet mit einem Messsystem D-PP15 (Platte-Platte-Konfiguration mit einem Plattenabstand von 1 mm) durchgeführt. Je eine Probe (0,2 g) der mit Benzoylperoxid und der mit 4-Dimethylaminobenzoesäureethylester versetzten Polyethercarbonatpolyole wurden auf der Rheometerplatte des Rheometers gemischt und bei 60°C und einer dynamischen Oszillation von 1 Hz einer 10%igen Scherung unterworfen. Über 60 min wurde in 10 s Intervallen der Speicher- und Verlustmodul gemessen. Als Gelpunkt wurde der Zeitpunkt gewählt, an dem Speichermodul (G’) und Verlustmodul (G") gleich groß sind (G’/G"=1).

Beispiel 5: Mischung Terpolymer, elektronenreich, 13,6 mol-% AGE + Terpolymer elektronenarm, 12,8 mol-% MSA

Es wurden 0,2 g des 4-Dimethylaminobenzoesäureethylester-haltigen Terpolymers 1-3 mit 0,2 g des benzoylperoxidhaltigen Terpolymers 2-3 gemischt.

Beispiel 6 (Vgl.): Terpolymer, elektronenreich, 13,6 mol-% AGE

Es wurde 0,4 g des 4-Dimethylaminobenzoesäureethylester-haltigen Terpolymers 1-3 eingesetzt.

Beispiel 7 (Vgl.): Terpolymer, elektronenarm, 12,8 mol-% MSA

Es wurde 0,4 g des Terpolymers 2-3 eingesetzt.

Tabelle 1: Ergebnisse der Redox-Initiierung an Polyethercarbonatpolyol-Mischungen

| Beispiel | System | Art der Doppelbindungen | Durchschnittliche Dichte Doppelbindungen | Zeit bis Erreichen des Gelpunkts |
|---|---|---|---|---|
| 5 | Mischung | Elektronenreich + elektronenarm | 12 mol-% | 20 min |
| 6 (Vgl.) | Terpolymer | Elektronenreich | 12 mol-% | > 60 min |
| 7 (Vgl.) | Terpolymer | Elektronenarm | 12 mol-% | > 60 min |
| Vgl: Vergleichsbeispiel | | | | |

Die Beispiele 5 - 7 zeigen, dass eine radikalische Vernetzung einer Mischung von Polyethercarbonatpolyolen mit elektronenarmen und -reichen Doppelbindungen eine kürzere Zeit bis zum Aushärten der Mischung (kürzere Zeit bis zum Erreichen des Gelpunktes) benötigt, als die Vernetzung von Polyethercarbonatpolyolen enthaltend nur elektronenreiche oder nur elektronenarme Doppelbindungen.

Beispiel 8: Block-Terpolymer, elektronenreiche (6,9 mol-% AGE) und elektronenarme (7,2 mol-% MSA) Doppelbindungen in einem Molekül

Es wurden 0,4 g des Polyethercarbonatpolyols nach Beispiel 3 eingesetzt.

Beispiel 9 (Vgl.): Terpolymer, elektronenreich, 6,4 mol-% AGE

Es wurden 0,4 g des Terpolymers 1-2 eingesetzt.

Beispiel 10 (Vgl.): Terpolymer, elektronenarm, 6,1 mol-% MSA

Es wurden 0,4 g des Terpolymers 2-2 eingesetzt.

Tabelle 2: Ergebnisse der Redox-Initiierung an (Block-)Terpolymer-Polyethercarbonatpolyolen

| Beispiel | System | Art der Doppelbindungen | Durchschnittliche Dichte Doppelbindungen | Zeit bis Erreichen des Gelpunkts |
|---|---|---|---|---|
| 8 | Block-terpolymer | Elektronenreich + elektronenarm | 6 mol-% | 5 min |
| 9 (Vgl.) | Terpolymer | Elektronenreich + elektronenreich | 6 mol-% | > 60 min |
| 10 (Vgl.) | Terpolymer | Elektronenarm + elektronenarm | 6 mol-% | > 60 min |
| Vgl: Vergleichsbeispiel | | | | |

Die Beispiele 8 - 10 zeigen, dass eine radikalische Vernetzung von Polyethercarbonatpolyolen mit elektronenarmen und -reichen Doppelbindungen innerhalb eines Moleküls eine kürzere Zeit bis zum Aushärten (kürzere Zeit bis zum Erreichen des Gelpunktes) benötigt, als die Vernetzung von Polyethercarbonatpolyolen mit nur elektronenreichen oder nur elektronenarmen Doppelbindungen innerhalb eines Moleküls.

Allgemeine Vorschrift für die radikalische Vernetzung der Polyethercarbonatpolyole enthaltend elektronenarme und elektronenreiche Doppelbindungen unter UV-Bestrahlung

Die Vernetzung unter UV-Bestrahlung wurde auf einem Rheometer Physica MCR 501 der Fa. Anton Paar ausgestattet mit einem Messsystem D-PP15 (Platte-Platte-Konfiguration mit einem Abstand von 1 mm) durchgeführt. Je eine Probe (0,4 g) der mit Benzoylperoxid versetzten Polyethercarbonatpolyole wurden auf der Rheometerplatte des Rheometers gemischt und bei 25°C und einer dynamischen Oszillation von 1Hz einer 10%igen Scherung unterworfen. Gleichzeitig wurde die Probe einer UV Bestrahlung mit einer Intensität von 22,7 W/cm$^2$ unterworfen. Als Strahlungsquelle wurde eine Quecksilberlampe Omnicure Series 1000 der Fa. Lumen Dynamics mit einer Leistung von 100 W eingesetzt. Als Filteroption wurde 320-500 nm gewählt. Über 60 min wurde in 10 s Intervallen der Speicher- und Verlustmodul gemessen. Bei Reaktionszeiten unter 2 min wurde viermal pro Sekunde der Speicher- und Verlustmodul gemessen. Als Gelpunkt wurde der Zeitpunkt gewählt, an dem Speichermodul (G') und Verlustmodul (G") gleich groß sind (G'/G"=1).

Beispiel 11: Mischung Terpolymer, elektronenreich, 2,6 mol-% AGE + Terpolymer, elektronenarm, 2,7 mol-% MSA

Es wurden 0,2 g des benzoylperoxidhaltigen Terpolymers 1-1 mit 0,2 g des benzoylperoxidhaltigen Terpolymers 2-1 gemischt.

Beispiel 12: Mischung Terpolymer, elektronenreich, 6,4 mol-% AGE + Terpolymer, elektronenarm, 6,1 mol-% MSA

Es wurden 0,2 g des benzoylperoxidhaltigen Terpolymers 1-2 mit 0,2 g des benzoylperoxidhaltigen Terpolymers 2-2 gemischt.

Beispiel 13: Mischung Terpolymer, elektronenreich, 13,6 mol-% AGE + Terpolymer elektronenarm, 12,8 mol-% MSA

Es wurden 0,2 g des benzoylperoxidhaltigen Terpolymers 1-3 mit 0,2 g des benzoylperoxidhaltigen Terpolymers 2-3 gemischt.

Beispiel 14: Block-Terpolymer, elektronenreiche (1,8 mol-% AGE) und elektronenarme (1,2 mol-% MSA) Doppelbindungen in einem Molekül

Es wurden 0,4 g des benzoylperoxidhaltigen Polyethercarbonatpolyols nach Beispiel 1 eingesetzt.

Beispiel 15: Block-Terpolymer, elektronenreiche (2,9 mol-% AGE) und elektronenarme (3,3 mol-% MSA) Doppelbindungen in einem Molekül

Es wurden 0,4 g des benzoylperoxidhaltigen Polyethercarbonatpolyols nach Beispiel 2 eingesetzt.

Beispiel 16: Block-Terpolymer, elektronenreiche (6,9 mol-% AGE) und elektronenarme (7,2 mol-% MSA) Doppelbindungen in einem Molekül

Es wurden 0,4 g des benzoylperoxidhaltigen Polyethercarbonatpolyols nach Beispiel 3 eingesetzt.

Beispiel 17 (Vgl.): Terpolymer, elektronenreich, 13,6 mol-% AGE

Es wurden 0,4 g des benzoylperoxidhaltigen Terpolymers 1-3 eingesetzt.

Beispiel 18 (Vgl.): Terpolymer, elektronenarm, 12,8 mol-% MSA

Es wurden 0,4 g des benzoylperoxidhaltigen Terpolymers 2-3 eingesetzt.

Beispiel 19 (Vgl.): Copolymer, ohne Doppelbindungen

Es wurden 0,4 g des benzoylperoxidhaltigen Polyethercarbonatpolyols nach Beispiel 4 eingesetzt.

Tabelle 3: Ergebnisse UV-initiierte radikalische Vernetzung

| Beispiel | System | Art der Doppelbindungen | Durchschnittliche Dichte Doppelbindungen | Zeit bis Erreichen des Gelpunkts |
|---|---|---|---|---|
| 11 | Mischung | Elektronenreich + elektronenarm | 3 mol-% | 8,5 min |
| 12 | Mischung | Elektronenreich + elektronenarm | 6 mol-% | 5,9 min |
| 13 | Mischung | Elektronenreich + elektronenarm | 12 mol-% | 3,9 min |
| 14 | Block-Terpolymer | Elektronenreich + elektronenarm | 3 mol-% | 7,3 min |
| 15 | Block-Terpolymer | Elektronenreich + elektronenarm | 6 mol-% | 2,9 min |
| 16 | Block-Terpolymer | Elektronenreich + elektronenarm | 12 mol-% | 1,0 min |
| 17 (Vgl.) | Terpolymer | Elektronenreich | 12 mol-% | > 60 min |
| 18 (Vgl.) | Terpolymer | Elektronenarm | 12 mol-% | > 60 min |
| 19 (Vgl.) | Copolymer | ohne Doppelbindungen | --- | > 60 min |
| Vgl: Vergleichsbeispiel | | | | |

Die Tabelle zeigt, dass Terpolymere, die nur elektronenreiche oder elektronenarme Doppelbindungen enthalten schlecht härten. Die Mischungen aus elektronenarmen und elektronenreichen Polymeren weisen kurze Zeiten bis zum Aushärten (kurze Zeiten bis zum Erreichen des Gelpunktes) auf, während Blockcopolymere, enthaltend elektronenarme und elektronenreiche Doppelbindungen, besonders kurze Zeiten bis zum Aushärten (besonders kurze Zeiten bis zum Erreichen des Gelpunktes) aufweisen.

## Patentansprüche

1. Verfahren zur Herstellung von Polyethercarbonatpolyolen, wobei die Polyethercarbonatpolyole Doppelbindungen enthalten, umfassend die Schritte:

   ($\alpha$) Vorlegen eines Katalysators und:

   ($\alpha\alpha$) eines Suspensionsmittels, das keine H-funktionellen Gruppen enthält und/oder
   ($\alpha\beta$) einer H-funktionellen Starterverbindung

   ($\gamma$) Zudosieren von Kohlendioxid, eines Epoxides, das keine ungesättigte Gruppe enthält, und mindestens zweier ungesättigter Verbindungen,

   **dadurch gekennzeichnet, dass**
   die in Schritt ($\gamma$) zudosierten ungesättigten Verbindungen aus der Gruppe der ungesättigten Epoxide und/oder ungesättigten cyclischen Anhydride ausgewählt sind, wobei

   ($\gamma$1) eine der ungesättigten Verbindungen eine Doppelbindung umfassend mindestens einen Substituenten ausgewählt aus der Gruppe $-OX^1$, $-OCOX^1$, $-X^1$, $-CH_2OX^1$ und/oder $-CH=CHX^1$ umfasst und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;
   ($\gamma$2) und eine andere der ungesättigten Verbindungen eine Doppelbindung umfassend mindestens einen Substituenten ausgewählt aus der Gruppe -F, -Cl, -Br, -I, -COH, $-COX^2$, - $COOX^2$, $-C\equiv N$ und/oder $-NO_2$ umfasst

oder ein ungesättigtes, substituiertes oder unsubstituiertes cyclisches Anhydrid einer organischen Dicarbonsäure ist und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht

und wobei weiterhin für den Fall, dass in Schritt (α) keine H-funktionelle Starterverbindung vorgelegt wurde, Schritt (γ) das Zudosieren einer H-funktionellen Starterverbindung umfasst.

**2.** Verfahren nach Anspruch 1, weiterhin umfassend den Schritt(β) zwischen Schritt (α) und Schritt (γ):

(β) Zudosieren mindestens eines Epoxides

**3.** Verfahren nach Anspruch 1 oder 2, wobei der Katalysator ein DMC-Katalysator ist.

**4.** Verfahren nach einem der vorhergehenden Ansprüche, wobei die ungesättigte Verbindung gemäß (γ2) ein ungesättigtes cyclisches Anhydrid mit einer Doppelbindung benachbart zu einer Carbonylgruppe ist.

**5.** Verfahren nach einem der vorhergehenden Ansprüche, wobei die ungesättigte Verbindung gemäß (γ2) ein ungesättigtes Epoxid ausgewählt aus der Gruppe der Glycidylester α,β-ungesättigter Säuren ist.

**6.** Verfahren nach einem der vorhergehenden Ansprüche, wobei die Temperatur im Schritt (γ) größer oder gleich 60°C und kleiner oder gleich 150 °C beträgt.

**7.** Verfahren nach einem der vorhergehenden Ansprüche, wobei die ungesättigte Verbindung gemäß (γ1) ausgewählt ist aus der Gruppe umfassend Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren und/oder teilweise epoxidierte Fette und Öle.

**8.** Polyethercarbonatpolyol aufweisend ungesättigte Gruppen, herstellbar nach einem Verfahren nach einem der vorhergehenden Ansprüche.

**9.** Polyethercarbonatpolyol nach Anspruch 8, wobei das Molverhältnis der Doppelbindungen mit Substituenten gemäß (γ1) zu Doppelbindungen mit Substituenten gemäß (γ2) einschließlich der von cyclischen Anhydriden stammenden Struktureinheiten im Polymer kleiner oder gleich 3:1 und größer oder gleich 1:3 beträgt.

**10.** Polyethercarbonatpolyol nach einem der Ansprüche 8-9, wobei die Glastemperatur des Polyethercarbonatpolyols mit ungesättigten Gruppen größer oder gleich -60°C und kleiner oder gleich 80°C beträgt.

**11.** Verfahren zur Vernetzung von Polyethercarbonatpolyolen enthaltend ungesättigte Gruppen, wobei die ungesättigten Gruppen umfassen:

(δ1) Doppelbindungen umfassend mindestens einen Substituenten ausgewählt aus der Gruppe - $OX^1$, $-OCOX^1$, $-X^1$, $-CH_2OX^1$ und/oder $-CH=CHX^1$ und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;
und
(δ2) Doppelbindungen umfassend mindestens einen Substituenten ausgewählt aus der Gruppe - F, -Cl, -Br, -I, -COH, $-COX^2$, $-COOX^2$, -C≡N und/oder $-NO_2$ und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht

und die Polyethercarbonatpolyole unter Zugabe eines Initiators ausgewählt aus der Gruppe der Photoinitiatoren, metallaktivierten Peroxiden und/oder Redoxinitiatoren untereinander zur Reaktion gebracht werden.

**12.** Verfahren nach Anspruch 11, wobei eine Mischung aus Polyethercarbonatpolyolen umfassend Doppelbindungen gemäß (δ1) und aus Polyethercarbonatpolyolen umfassend Doppelbindungen gemäß (δ2) vernetzt wird.

**13.** Vernetztes Polyethercarbonat, herstellbar nach einem Verfahren nach einem der Ansprüche 11-12.

**14.** Verwendung vernetzter Polyethercarbonate nach Anspruch 13 als Kautschuke, Dichtmassen, Klebstoffe, Lacke oder duromere Formkörper.

**15.** Zusammensetzung, umfassend:

- ein erstes Polyethercarbonatpolyol enthaltend Doppelbindungen, wobei die Doppelbindungen einen Substituenten umfassen, der ausgewählt ist aus der Gruppe $-OX^1$, - $OCOX^1$, $-X^1$, $-CH_2OX^1$ und/oder $-CH=CHX^1$ umfasst und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht; und
- ein zweites Polyethercarbonatpolyol enthaltend Doppelbindungen, wobei die Doppelbindungen einen Substituenten umfassen, der ausgewählt ist aus der Gruppe-F, -Cl, -Br, -I, -COH, $-COX^2$, $-COOX^2$, -C≡N und/oder $-NO_2$ umfasst und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht.

## Claims

**1.** Process for preparing polyethercarbonate polyols, the polyethercarbonate polyols containing double bonds, comprising the steps of:

($\alpha$) initially introducing a catalyst and

($\alpha\alpha$) a suspension medium which contains no H-functional groups
and/or
($\alpha\beta$) an H-functional starter compound

($\gamma$) metering in carbon dioxide, an epoxide which contains no unsaturated group, and at least two unsaturated compounds,

**characterized in that**
the unsaturated compounds metered in step ($\gamma$) are selected from the group of the unsaturated epoxides and/or unsaturated cyclic anhydrides, and

($\gamma$1) one of the unsaturated compounds comprises a double bond comprising at least one substituent selected from the group of $-OX^1$, $-OCOX^1$, $-X^1$, $-CH_2OX^1$ and/or $-CH=CHX^1$, where $X^1$ in each case is substituted or unsubstituted alkyl, substituted or unsubstituted cycloalkyl, substituted or unsubstituted aryl or a substituted or unsubstituted methylene chain;
($\gamma$2) and another of the unsaturated compounds comprises a double bond comprising at least one substituent selected from the group of -F, -Cl, -Br, -I, -COH, $COX^2$, $-COOX^2$, -C≡N and/or $-NO_2$ or is an unsaturated, substituted or unsubstituted cyclic anhydride of an organic dicarboxylic acid, where $X^2$ in each case is substituted or unsubstituted alkyl, substituted or unsubstituted cycloalkyl, substituted or unsubstituted aryl or a substituted or unsubstituted methylene chain;

and where additionally, if no H-functional starter compound is introduced in step ($\alpha$), step ($\gamma$) comprises the metering in of an H-functional starter compound.

**2.** Process according to Claim 1, further comprising the following step ($\beta$) between step ($\alpha$) and step ($\gamma$):

($\beta$) metering in of at least one epoxide.

**3.** Process according to Claim 1 or 2, the catalyst being a DMC catalyst.

**4.** Process according to any of the preceding claims, the unsaturated compound as per ($\gamma$2) being an unsaturated cyclic anhydride having a double bond adjacent to a carbonyl group.

**5.** Process according to any of the preceding claims, the unsaturated compound as per ($\gamma$2) being an unsaturated

epoxide selected from the group of the glycidyl esters of α,β-unsaturated acids.

6. Process according to any of the preceding claims, the temperature in step (γ) being greater than or equal to 60°C and less than or equal to 150°C.

7. Process according to any of the preceding claims, the unsaturated compound as per (γ1) being selected from the group encompassing allyl glycidyl ether, vinylcyclohexene oxide, cyclooctadiene monoepoxide, cyclododecatriene monoepoxide, butadiene monoepoxide, isoprene monoepoxide, limonene oxide, 1,4-divinylbenzene monoepoxide, 1,3-divinylbenzene monoepoxide, glycidyl esters of unsaturated fatty acids and/or partially epoxidized fats and oils.

8. Polyethercarbonate polyol comprising unsaturated groups, preparable by a process according to any of the preceding claims.

9. Polyethercarbonate polyol according to Claim 8, the molar ratio of the double bonds with substituents as per (γ1) to double bonds with substituents as per (γ2), including the structural units in the polymer that originate from cyclic anhydrides, being less than or equal to 3:1 and greater than or equal to 1:3.

10. Polyethercarbonate polyol according to one of Claims 8-9, the glass transition temperature of the polyethercarbonate polyol with unsaturated groups being greater than or equal to -60°C and less than or equal to 80°C.

11. Process for crosslinking polyethercarbonate polyols containing unsaturated groups, the unsaturated groups comprising:

(δ1) double bonds comprising at least one substituent selected from the group of $-OX^1$, $-OCOX^1$, $-X^1$, $-CH_2OX^1$ and/or $-CH=CHX^1$ where $X^1$ in each case is substituted or unsubstituted alkyl, substituted or unsubstituted cycloalkyl, substituted or unsubstituted aryl or a substituted or unsubstituted methylene chain;
and
(δ2) double bonds comprising at least one substituent selected from the group of -F, -Cl, -Br, -I, -COH, $-COX^2$, $COOX^2$, -C≡N and/or $-NO_2$ where $X^2$ in each case is substituted or unsubstituted alkyl, substituted or unsubstituted cycloalkyl, substituted or unsubstituted aryl or a substituted or unsubstituted methylene chain;

the polyethercarbonate polyols being reacted with one another with addition of an initiator selected from the group of the photoinitiators, metal-activated peroxides and/or redox initiators.

12. Process according to Claim 11, a mixture of polyethercarbonate polyols comprising double bonds as per (δ1) and of polyethercarbonate polyols comprising double bonds as per (δ2) being crosslinked.

13. Crosslinked polyethercarbonate preparable by a process according to one of Claims 11-12.

14. Use of crosslinked polyethercarbonates according to Claim 13 as rubbers, sealants, adhesives, coatings or thermoset moldings.

15. Composition, comprising:

- a first polyethercarbonate polyol containing double bonds, the double bonds comprising a substituent which is selected from the group of $-OX^1$, $-OCOX^1$, $-X^1$, $-CH_2OX^1$ and/or $-CH=CHX^1$, where $X^1$ in each case is substituted or unsubstituted alkyl, substituted or unsubstituted cycloalkyl, substituted or unsubstituted aryl or a substituted or unsubstituted methylene chain; and
- a second polyethercarbonate polyol containing double bonds, the double bonds comprising a substituent which is selected from the group of - F, -Cl, -Br, -I, -COH, $-COX^2$, $-COOX^2$, -C≡N and/or $-NO_2$, where $X^2$ in each case is substituted or unsubstituted alkyl, substituted or unsubstituted cycloalkyl, substituted or unsubstituted aryl or a substituted or unsubstituted methylene chain.

## Revendications

1. Procédé de fabrication de polyéther-carbonate-polyols, les polyéther-carbonate-polyols contenant des doubles liaisons, comprenant les étapes suivantes :

(α) le chargement d'un catalyseur et

(αα) d'un agent de suspension qui ne contient pas de groupes à fonction H et/ou
(αβ) d'un composé de départ à fonction H,
(γ) l'ajout de dioxyde de carbone, d'un époxyde qui ne contient pas de groupe insaturé et d'au moins deux composés insaturés,

**caractérisé en ce que**
les composés insaturés ajoutés à l'étape (γ) sont choisis dans le groupe constitué par les époxydes insaturés et/ou les anhydrides cycliques insaturés,

(γ1) un des composés insaturés comprenant une double liaison comprenant au moins un substituant choisi dans le groupe constitué par $-OX^1$, $-OCOX^1$, $-X^1$, $-CH_2OX^1$ et/ou $-CH=CHX^1$, $X^1$ représentant à chaque fois alkyle substitué ou non substitué, cycloalkyle substitué ou non substitué, aryle substitué ou non substitué ou une chaîne méthylène substituée ou non substituée ;
(γ2) et un autre des composés insaturés comprenant une double liaison comprenant au moins un substituant choisi dans le groupe constitué par -F, -Cl, -Br, -I, - COH,

$-COX^2$, $-COOX^2$, -C≡N et/ou $-NO_2$, ou un anhydride cyclique insaturé, substitué ou non substitué, d'un acide dicarboxylique organique, $X^2$ représentant à chaque fois alkyle substitué ou non substitué, cycloalkyle substitué ou non substitué, aryle substitué ou non substitué ou une chaîne méthylène substituée ou non substituée,
et par ailleurs, lorsqu'un composé de départ à fonction H n'a pas été chargé à l'étape (α), l'étape (γ) comprenant l'ajout d'un composé de départ à fonction H.

2. Procédé selon la revendication 1, comprenant en outre l'étape (β) entre l'étape (α) et l'étape (γ) :

    (β) l'ajout d'au moins un époxyde.

3. Procédé selon la revendication 1 ou 2, dans lequel le catalyseur est un catalyseur DMC.

4. Procédé selon l'une quelconque des revendications précédentes, dans lequel le composé insaturé selon (γ2) est un anhydride cyclique insaturé contenant une double liaison voisine d'un groupe carbonyle.

5. Procédé selon l'une quelconque des revendications précédentes, dans lequel le composé insaturé selon (γ2) est un époxyde insaturé choisi dans le groupe des esters glycidyliques d'acides α,β-insaturés.

6. Procédé selon l'une quelconque des revendications précédentes, dans lequel la température à l'étape (γ) est supérieure ou égale à 60 °C et inférieure ou égale à 150 °C.

7. Procédé selon l'une quelconque des revendications précédentes, dans lequel le composé insaturé selon (γ1) est choisi dans le groupe comprenant l'éther d'allylglycidyle, l'oxyde de vinylcyclohexène, le monoépoxyde de cyclooctadiène, le monoépoxyde de cyclododécatriène, le monoépoxyde de butadiène, le monoépoxyde d'isoprène, l'oxyde de limonène, le monoépoxyde de 1,4-divinylbenzène, le monoépoxyde de 1,3-divinylbenzène, les esters glycidyliques d'acides gras insaturés et/ou les matières grasses et huiles partiellement époxydées.

8. Polyéther-carbonate-polyol comprenant des groupes insaturés, pouvant être fabriqué par un procédé selon l'une quelconque des revendications précédentes.

9. Polyéther-carbonate-polyol selon la revendication 8, dans lequel le rapport molaire entre les doubles liaisons comprenant des substituants selon (γ1) et les doubles liaisons comprenant des substituants selon (γ2) y compris les unités structurales provenant d'anhydrides cycliques dans le polymère est inférieur ou égal à 3:1 et supérieur ou égal à 1:3.

10. Polyéther-carbonate-polyol selon l'une quelconque des revendications 8 à 9, dans lequel la température de transition vitreuse du polyéther-carbonate-polyol contenant des groupes insaturés est supérieure ou égale à -60 °C et inférieure ou égale à 80 °C.

11. Procédé de réticulation de polyéther-carbonate-polyols contenant des groupes insaturés, les groupes insaturés

comprenant :

(δ1) des doubles liaisons comprenant au moins un substituant choisi dans le groupe constitué par -$OX^1$, -$OCOX^1$, -$X^1$, -$CH_2OX^1$ et/ou -$CH{=}CHX^1$, $X^1$ représentant à chaque fois alkyle substitué ou non substitué, cycloalkyle substitué ou non substitué, aryle substitué ou non substitué ou une chaîne méthylène substituée ou non substituée ;
et
(δ2) des doubles liaisons comprenant au moins un substituant choisi dans le groupe constitué par -F, - Cl, -Br, -I, -COH, -$COX^2$, -$COOX^2$, -C≡N et/ou -$NO_2$, $X^2$ représentant à chaque fois alkyle substitué ou non substitué, cycloalkyle substitué ou non substitué, aryle substitué ou non substitué ou une chaîne méthylène substituée ou non substituée,

et les polyéther-carbonate-polyols étant mis en réaction les uns avec les autres avec ajout d'un initiateur choisi dans le groupe constitué par les photoinitiateurs, les peroxydes activés par des métaux et/ou les initiateurs redox.

**12.** Procédé selon la revendication 11, dans lequel un mélange de polyéther-carbonate-polyols comprenant des doubles liaisons selon (δ1) et de polyéther-carbonate-polyols comprenant des doubles liaisons selon (δ2) est réticulé.

**13.** Polyéther-carbonate réticulé, pouvant être fabriqué par un procédé selon l'une quelconque des revendications 11 à 12.

**14.** Utilisation de polyéther-carbonates réticulés selon la revendication 13 en tant que caoutchoucs, matériaux d'étanchéité, adhésifs, vernis ou corps moulés duromères.

**15.** Composition, comprenant :

- un premier polyéther-carbonate-polyol contenant des doubles liaisons, les doubles liaisons comprenant un substituant qui est choisi dans le groupe constitué par -$OX^1$, -$OCOX^1$, -$X^1$, -$CH_2OX^1$ et/ou -$CH{=}CHX^1$, $X^1$ représentant à chaque fois alkyle substitué ou non substitué, cycloalkyle substitué ou non substitué, aryle substitué ou non substitué ou une chaîne méthylène substituée ou non substituée ; et
- un deuxième polyéther-carbonate-polyol contenant des doubles liaisons, les doubles liaisons comprenant un substituant qui est choisi dans le groupe constitué par -F, -Cl, -Br, -I, -COH, -$COX^2$, -$COOX^2$, -C≡N et/ou - $NO_2$, $X^2$ représentant à chaque fois alkyle substitué ou non substitué, cycloalkyle substitué ou non substitué, aryle substitué ou non substitué ou une chaîne méthylène substituée ou non substituée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2604641 A
- EP 2604642 A
- WO 2013016331 A
- WO 2010028362 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Makromolekulare Chemie,* 1969, vol. 130, 210-220
- *J. Polym. Sci.,* 2006, vol. 44 (18), 5329-5336
- *Journal American Chemical Society,* 2004, vol. 126, 11404-11405
- *In Polymer,* 2006, vol. 47, 8453-8461
- *J. Polymer Research,* 2009, vol. 16, 91-97
- Polymer Chemistry. *In Journal of Polymer Science,* 2006, vol. 44 (18), 5329-5336
- *Chemical Communications,* 2011, vol. 47, 141-163
- **MYERS ; TERRY N.** Kirk-Othmer Encyclopedia of Chemical Technology. 2005, vol. 14, 274-311
- **BEVINGTON ; JOHN C.** *Makromolekulare Chemie, Macromolecular Symposia,* 1987, vol. 10 (1), 89
- **FOUASSIER, JEAN PIERRE ; ALLONAS, XAVIER ; LALEVEE, JACQUES ; DIETLIN, CELINE.** *Photochemistry and Photophysics of Polymer Materials,* 2010, 351-419
- **SMA, CHRISTIAN.** *Angewandte Makromolekulare Chemie,* 1969, vol. 9, 165-181
- **MISRA, G. S. ; BAJPAI U. D. N.** *Progress in Polymer Science,* 1982, vol. 8 (1-2), 61-131